# EUROPEAN PATENT SPECIFICATION

(11) **EP 3 911 140 B1**
(45) Date of publication and mention of the grant of the patent: **02.11.2022**
(21) Application number: 20700610.7
(22) Date of filing: 17.01.2020
(51) Int. Cl.: A01C 21/00, A01C 5/04, A01C 23/02, A01C 7/04

(54) **AGRICULTURAL FERTILIZER DEPLOYING SYSTEM FOR PACKAGED FARM FERTILIZER**
LANDWIRTSCHAFTLICHES DÜNGEMITTELAUSBRINGSYSTEM FÜR ABGEPACKTES LANDWIRTSCHAFTLICHES DÜNGEMITTEL
SYSTÈME DE DÉPLOIEMENT D'ENGRAIS AGRICOLES POUR ENGRAIS AGRICOLE EMBALLÉ

(30) Priority: 18.01.2019 EP 19152618
(43) Date of publication of application: 24.11.2021
(73) Proprietor: Technische Universität München, 80333 München (DE)
(72) Inventor: WIECHA, Jochen, Georg, 94256 Drachselsried (DE); HIJAZI, Omar, 84048 Mainburg (DE); BERNHARDT, Heinz, 35582 Wetzlar (DE)
(74) Representative: Lucke, Andreas
(86) International application number: PCT/EP2020/051129
(87) International publication number: WO 2020/148429

(56) References cited:
- FR-A- 1 432 666
- JP-A- S6 371 107
- JP-A- H08 308 315
- US-A- 3 331 532
- US-A- 3 817 042
- US-A- 4 694 606
- US-A- 5 165 351
- US-B2- 9 745 094

## Description

### FIELD OF THE INVENTION

The present invention is in the field of agricultural implements. More precisely, the present invention relates to agricultural implements suitable for deploying farm fertilizer in liquid or semi-liquid form.

### BACKGROUND

Farm fertilizer provides nutrients essential for the growth of plants and can be obtained as a regrowing by-product from agricultural farming by collecting manure from livestock, plant residue from crop farming, or processed biological matter, such as fermentation substrate separated from biological matter in biogas plants, or as an arbitrary combination of biologically and synthetically obtained plant nutrients.

Traditionally, farm fertilizer is sprayed in liquid form, particularly in semi-liquid form, onto agriculturally used areas. Alternatively, particulate material may be distributed over the field to be liquid activated by liquid fertilizer during deployment, as described in patent application US 2016/0000003 A1. However, spraying techniques are associated with odor contamination, high volatility of the fertilizer and an increased emission of greenhouse gases. Recent governmental regulations therefore increasingly penalize conventional spraying methods in favor of ground level deployment of farm fertilizer. Preparation of particulate fertilizer is further energy inefficient.

Ground level deployment of farm fertilizer includes drag hose deployment of liquid or semi-liquid fertilizer, optionally using a drag shoe or channel processes to introduce the fertilizer into near-surface zones of the soil, thereby limiting volatilization of the fertilizer (especially in case of adverse weather conditions) as well as emission of greenhouse gases and odors of the farm fertilizer during or subsequent to deployment.

For example, DE 10 2016 121 655 A1 discloses an agricultural implement using a disc injection method to provide channels in the agriculturally used farmland, combined with a fertilizer conduit delivering liquid fertilizer directly onto the revolving discs to inject the liquid fertilizer into the subsurface region of soil during the revolving motion of the discs.

In a different technical field, CN107098754 discloses a compostable bag filled with a combination of Chinese medicine and fertilizer to be introduced into deep soil regions between 40 cm to 50 cm below the soil surface to gradually give off substances to the surrounding soil region.

US 4,694,606 discloses a device for planting a seed tape. The seed tape comprises a plurality of seeds held thereupon by any known means such as gluing, taping, impregnating or the like, with chemical additives such as a fertilizer patch as an optional addition on the seed tape. The device cuts the seed tape into segments and a rod then folds and forces the singulated segments into a shallow ground section.

JP6371107 relates to a sowing method for packed seeds. Two materials are used to fold over seeds and fertilizer may also be enclosed between the two enclosing materials. The sowing method is performed by rotating a disk to open a shallow portion of the soil and the packed seeds are singulated with a blade and dropped into the shallow portion. The trench is then covered by a trailing wheel.

JP 0830815 discloses a sheet of organic material enclosing rice seeds in a two-dimensional array of pockets. The sheet can be deployed directly onto paddy fields, allowing the suppression of weeds and the increase of the water temperature of the paddy field below the sheet. Granular fertilizer and chemicals can be added and integrated with the pocket containing the seed. The organic material of the sheet may then be dissolved in the paddy field to finish the sowing.

US 3, 331, 532 discloses a seed planting apparatus with automatic seed tape feed control. Seeds are arranged between two tapes, which tape is treated with a nutrient solution to uniformly pre-germinate the seeds thereon. The seed tape is mechanically cut to singulated pockets containing seeds, which singulated pockets are then dropped into shallow grooves.

FR 1432666 discloses a tape composed of two overlying parts and enclosing single seeds and a corresponding apparatus for singulation of single seeds into very shallow soil regions. The tape is constructed in a double film tape manner and the two parts of the tape are brought out of abutment to drop the seeds onto the ground. Concentrated fertilizer or insecticides may be deployed in addition.

US 3, 817, 042 discloses an implement for planting a seed tape comprising a water-soluble strip encapsulating seeds at spaced apart locations therealong and provided in rolled form upon a reel from which the strip can be unwound. The device contains a wheel and a curved tube arranged adjacent to the wheel, wherein the curved tube guides the strip of seed tape into a shallow groove at a planting depth of approximately 1/4 of an inch, which groove may be formed by the curved tube.

US 5 165 351 A discloses a seed planter unit for deploying paper based seed tape, wherein fertilizer, herbicides or pesticides may be incorporated into the seed tape. Liquid fertilizer may be absorbed by the seed tape or granular fertilizer may be held on the tape by adhesives.

US 9 745 094 B2 discloses a research plot planter configured to automatically open seed packets with predetermined seed loads in an agricultural implement, to dispense the contents of the seed packets onto the soil and to discard the emptied packets.

### SUMMARY OF THE INVENTION

The known methods and corresponding devices however do not address the fact that a significant portion of emissions of odors and greenhouse gases may originate from the storage of liquid fertilizer prior to the deployment in reservoirs due to volatilization and fermentation processes. These emissions are the reason for building regulations for storage vessels and for lower regulatory limits for the distance of fertilizer storage to urbanized areas, thereby leading to increased costs for farmers. Additionally, the volatile components of the farm fertilizer may carry significant nutritional value for the soil which can be lost during storage as well as during deployment.

In view of this state-of-the-art, the object of the invention is to provide a farm fertilizer deploying system which allows limiting the nutrient loss and volatilization of farm fertilizer prior to and during deployment and is compatible with large-scale agricultural farming.

This object is solved by an agricultural fertilizer deploying system for farm fertilizer and a corresponding method of using an agricultural fertilizer deploying system for packaged fertilizer pouches according to the independent claims. The dependent claims relate to preferred embodiments.

According to a first aspect, the invention relates to an agricultural fertilizer deploying system for farm fertilizer, in particular an agricultural implement, said system comprising: a hold, a retrieval and dispensing section coupled to said hold and one or more subsurface injectors each coupled to said retrieval and dispensing section. The hold is configured to retain a plurality of fertilizer pouches, said fertilizer pouches each enclosing a pre-determined amount of said farm fertilizer. The retrieval and dispensing section is configured to retrieve said fertilizer pouches from the hold and to dispense a retrieved fertilizer pouch in a controllable manner. The one or more subsurface injectors are configured to receive the dispensed fertilizer pouch from said retrieval and dispensing section and to introduce the pre-determined amount of said farm fertilizer into a subsurface region of soil.

Thus, an agricultural fertilizer deploying system for farm fertilizer is provided for use with fertilizer pouches, such that a nutrient loss and volatilization of farm fertilizer prior to deployment can be minimized.

The fertilizer pouches enclose the farm fertilizer and may therefore provide improved storage conditions for the farm fertilizer. In particular, the fertilizer pouches enclosing said farm fertilizer may limit the emission of odors and/or volatile constituents during storage and deployment of the farm fertilizer, while the enclosing material may additionally keep the farm fertilizer from drying-out. Additionally, the fertilizer pouches may allow distributive trading of farm fertilizer using nonspecialized transport and storage equipment. The enclosing material of the fertilizer pouches is preferably chosen from compostable (biodegradable) materials, and most preferably transparent materials allowing for UV processing of manure based farm fertilizer, such as a compostable plastic or composite material comprising compostable plastic. The enclosing material preferably encloses the farm fertilizer liquid-tight and most preferably air-tight. Preferably, said enclosing material has a thickness substantially selected from a range between 10 micron and 1 mm to enable rapid composting of the enclosing material. In some embodiments, the enclosing material comprises several material layers, wherein at least one of the material layers encloses the farm fertilizer liquid-tight and most preferably air-tight. In some embodiments, at least one of the material layers is at least partially permeable or diffusive to enable expansion of the fertilizer pouch or compensation of pressure exerted onto the fertilizer pouch. For example, the fertilizer pouch may be formed by sandwiched inner and outer layers, wherein the inner layer of the fertilizer pouch may enclose the farm fertilizer and the outer layer may absorb and/or define a reservoir for diffused components or emissions of the farm fertilizer. Said reservoir may comprise and/or enclose active components to react with the farm fertilizer or emissions thereof, such as by providing an outer layer enclosing charcoal or brown coal and an inner layer containing said pre-determined amount of farm fertilizer. In some embodiments said active components may comprise additives for enhancing a rotting of the fertilizer pouch and/or additives for inhibiting a nitrification of soil. The fertilizer pouch may not contain or be arranged with any seeds to allow the fertilizer pouch to be introduced into an under-root fertilization depth.

In some embodiments, the fertilizer pouches comprise inner material layers and outer material layers, wherein additives for enhancing a rotting of the fertilizer pouch are enclosed between the inner material layer and the outer material layer. In some embodiments, a resistance to water of the inner material layer is higher than a resistance to water of the outer material layer.

In some embodiments, the fertilizer pouches may comprise biodegradable polymers, such as polyvinylalcohol, polycaprolaton, polyesteramid, polyesterurethane, partially aromatic polyesters, polyactids, polyhydroxybutyrat/valerat-copolymers, polyhydroxybutyrat, or the like. Further, the biodegradable polymers may be blended or filled with starch, e.g. starch modified with silanes, inorganic material composites, sodium hydroxide and/or waterproofed by treatment with turpentine resin, octenylsuccinic acid, silicone oil and/or thermoplasticised starch mixtures based on destructurized starch and ethylene acrylic acid copolymers.

In a preferred embodiment, the system is configured for deploying at least partially liquid farm fertilizer, in particular at least partially organic fertilizer, preferably comprising manure and/or fermentation substrate.

In principle, a plurality of fertilizer components can be combined and collectively packaged in a fertilizer pouch to thereby prepare a desired fertilizer composition for introduction into the soil. Organic fertilizer, such as manure and/or plant residue, is regrowable and can be gathered during livestock farming and/or as a byproduct from crop farming. Fermentation substrate can be gathered from the residue produced by biogas plants. However, further constituents, such as animal wastes, peat and/or treated sewage sludge may further be added without any loss of generality. Based on a different composition of farm fertilizer produced from different sources, such as the waste of different animals, the composition and/or thickness of the enclosing material may then be adapted to a respective water content and/or composition of the farm fertilizer for providing a given storage time/composting time for the enclosing material.

The system according to the first aspect is then configured to deploy said farm fertilizer pouches and/or the pre-determined amount of farm fertilizer enclosed therein onto farmland in a manner compatible with the fertilizer pouch properties and/or industrial farming techniques.

The hold is configured to store the fertilizer pouches, such that the integrity of the fertilizer pouches can be preserved until deployment. The hold may provide a storage container for receiving a plurality of fertilizer pouches via a chute, such as from a big pack, or a storage compartment for stacked layers or trays of organized fertilizer pouches. Moreover, the fertilizer pouches may be interconnected, such as in the form of a string of fertilizer pouches, and may therefore be stored in a folded or rolled up state, for example by rolling up the string of fertilizer pouches onto a drum integrated in or to be introduced into the hold.

The system then retrieves fertilizer pouches from the hold for subsequent deployment of farm fertilizer onto farmland by operating the retrieval and dispensing section in a controllable manner. For example, the system may dispense fertilizer pouches at a predetermined or derived dispensing frequency, to regularly retrieve and dispense individual fertilizer pouches, wherein said dispensing frequency can be selectable and/or based on a movement speed of the deploying system, to thereby define a selectable deploying density or distribution pattern for the farm fertilizer onto farmland.

Preferably, the retrieval and dispensing section comprises a sorting section to sort and optionally orient said fertilizer pouches retrieved from the hold into a plurality of branches of the retrieval and dispensing section, wherein each branch is associated with a corresponding subsurface injector to feed a stream of fertilizer pouches to each one of said one or more subsurface injectors.

The retrieval and dispensing section may comprise a sensor to track a dispensing of the fertilizer pouch. The information from the sensor may be used to track a position of a dispensed fertilizer pouch and/or a number of dispensed fertilizer pouches. The sensor may employ any suitable sensing method, such as an optical sensor (e.g. a camera) or a mechanically activated switch (e.g. a scale or a latch coupled to an electrical sensor) adapted to detect the presence or absence of a fertilizer pouch in an associated sensing section of the retrieval and dispensing section.

In some embodiments, the sensor may be adapted to scan an identifier of the fertilizer pouch, such as a code (e.g. a barcode, a QR code, an impression or the like) imprinted on or into the fertilizer pouch, in particular a code imprinted on a front or tail section of the fertilizer pouch. In some embodiments, the sensor comprises multiple sensing components to track a presence of the fertilizer pouch in the retrieval and dispensing section and/or in the one or more subsurface injectors, such as to detect jamming of the retrieval and dispensing section and/or the one or more subsurface injectors.

In some embodiments, the system comprises a controller adapted to receive an identifier of the fertilizer pouch or an identifier of a plurality of fertilizer pouches, such as an identifier of a string of interconnected fertilizer pouches or a batch of related fertilizer pouches to record documentation regarding the fertilization properties of deployed fertilizer pouches.

In some embodiments, said documentation includes geographic information on a deployment position of the fertilizer pouch and a fertilizer property of the farm fertilizer enclosed in the fertilizer pouches.

For example, the fertilizer property may include a water content of the farm fertilizer and/or a nutrition value associated with the farm fertilizer and/or an additive content. In some embodiments, said geographic information is stored with the identifier of a fertilizer pouch, wherein the predetermined amount of farm fertilizer enclosed in said fertilizer pouch is deployed at said deployment position.

In a preferred embodiment, the system further comprises a conveyor to guide the plurality of fertilizer pouches from the hold to said retrieval and dispensing section.

Guiding said fertilizer pouches using a conveyor may minimize a strain on the enclosing material of the fertilizer pouches, thereby limiting structural failure of the enclosing material during deployment and consequently limiting leakage of said farm fertilizer in the deploying system. The retrieval and dispensing section may also comprise associated separating elements to sort and/or orient the fertilizer pouches retrieved from the hold.

The retrieval and dispensing section may further be coupled to and/or comprise hoppers to receive a dispensed fertilizer pouch and to direct said fertilizer pouch towards an associated subsurface injector.

In a preferred embodiment, the retrieval and dispensing section comprises one or more controllable dispensing mechanisms configured to selectively dispense a fertilizer pouch retrieved by said retrieval and dispensing section, said one or more controllable dispensing mechanisms in particular comprising at least one of a pneumatic suction device, a pneumatic discharge jet and a hatch.

For example, fertilizer pouches may be selectively retrieved from the hold and/or from the retrieval and dispensing section using said pneumatic suction device and/or may be discharged from said retrieval and dispensing section towards the subsurface injectors using said pneumatic discharge jet. Preferably, said controllable dispensing mechanism comprises a hatch, which may be triggered to open and thereby dispense a selected fertilizer pouch. In some embodiments, said hatch comprises one or more rotatable elements, such as metal fingers, to retain and controllably dispense a dispensed fertilizer pouch by rotating the one or more rotatable elements.

In some embodiments, the controllable dispensing mechanism comprises a conveyor and is configured to control an operation and/or a speed of said conveyor to controllably dispense fertilizer pouches located on the conveyor towards the one or more subsurface injectors, such as via one or more hoppers associated with the one or more subsurface injectors.

The subsurface injectors can be configured to introduce the dispensed fertilizer pouch into a subsurface deposition region of soil in a controlled manner. Preferably, a plurality of subsurface injectors is arranged substantially perpendicular to the movement direction of the system to simultaneously introduce fertilizer pouches into the subsurface deposition region of soil.

In a preferred embodiment, the one or more subsurface injectors are configured to introduce the dispensed fertilizer pouch into a subsurface deposition region of soil, wherein said subsurface deposition region of soil is in particular located in a range of 5 cm to 35 cm, preferably of 10 cm to 30 cm, below the soil surface.

In other words, the subsurface region of soil may be arranged below a seed planting depth, such as more than 5 cm below the soil surface or more than 10 cm below the soil surface, and/or may be configured for under-root fertilization of soil.

Preferably, said fertilizer pouches are introduced into a depth of more than 10 cm to induce an increased nutrient density in deeper soil levels and thereby promote growth of plant roots into lower lying soil levels which can be associated with improved resistance to desiccation. Subsurface injectors configured to introduce the dispensed fertilizer pouch into a subsurface deposition region of soil up to around 30 cm below the soil surface can allow integrating said subsurface injectors with tilling cultivators and may reduce wear of the subsurface injectors.

In some embodiments, the system is configured for introducing farm fertilizer into deep soil regions more than 15 cm or more than 20 cm below the soil surface in order to promote growth of plant roots into lower lying soil levels.

In some embodiments, the one or more subsurface injectors are configured to introduce farm fertilizer at a first fertilization depth and at a second fertilization depth. For example, the one or more subsurface injectors may be configured to introduce fertilizer pouches at the first fertilization depth arranged below a seed planting depth and to introduce fertilizer pouches at the second fertilization depth arranged in deep soil levels arranged below the first fertilization depth and in particular more than 10 cm below the seed planting depth.

The subsurface injectors preferably comprise guiding sections for the fertilizer pouches having a width corresponding substantially to a width of the fertilizer pouches. In preferred embodiments, the fertilizer pouches comprise elongated, substantially cylindrical fertilizer containing sections having a width of around 2 cm to 10 cm, preferably of around 3 cm to 5 cm, and the guiding section of the subsurface injectors is equally substantially cylindrical to accommodate and guide said fertilizer pouches into the subsurface deposition region of soil. However, the size of the fertilizer pouch is preferably adapted to the deploying density in the respective application. For example, a deploying density in crop farming may vary between 10 cm to 1 m based on the type of crop, e.g. a distance between neighboring fertilizer pouches and/or the farm fertilizer enclosed therein of 10 cm for grain and of 90 cm for potatoes, and the farm fertilizer capacity of the fertilizer pouches may be adapted such as to obtain a given deployed farm fertilizer density in view of said deploying density of fertilizer pouches. However, the deploying density of fertilizer pouches may also depend on the type of soil. For example, a deploying density of fertilizer pouches for grassland may be lower, such as by spacing neighboring fertilizer pouches by at least 1 m, to reduce the damage to the turf during deployment. Preferably, the dispensing and retrieval section and/or subsurface injectors can be operated in a controlled manner to obtain a given deployed farm fertilizer density, such as by adjusting a dispensing and/or injection rate for said fertilizer pouches.

In some embodiments, the one or more subsurface injectors comprise a rotatable guiding segment at or close to the subsurface deposition region of soil, wherein the rotatable guiding segment is configured to assist introduction of fertilizer pouches into the subsurface deposition region of soil.

In preferred embodiments, the system further comprises at least one unsealing unit, wherein the at least one unsealing unit is arranged at or close to the one or more subsurface injectors, and is configured to at least partially unseal the dispensed fertilizer pouch, allowing said fertilizer pouch to give off said farm fertilizer into the subsurface deposition region of soil.

As part of deploying said fertilizer pouches, the system may be configured to at least partially unseal said fertilizer pouches using the unsealing unit. In principle, compostable fertilizer pouches with compostable enclosing material will eventually give off said farm fertilizer to the surrounding soil region. However, relying on the composting process for the delivery of farm fertilizer to the subsurface soil regions can induce temporal and spatial non-uniformness in the nutrient composition of soil. Thus, the unsealing unit may at least partially unseal the fertilizer pouch by triggering or assisting the composting process using selectively introduced reagents and/or by mechanically disrupting the structural integrity of the enclosing material, such as by puncturing, ripping, cutting and/or breaking of the enclosing material.

In a preferred embodiment, the unsealing unit is configured to unseal said dispensed fertilizer pouch close to or below ground-level after said dispensed fertilizer pouch is dispensed from said retrieval and dispensing section.

For example, the unsealing unit may be integrated with the rotatable guiding segment of a subsurface injector to at least partially unseal the dispensed fertilizer pouch at or close to the deposition region of soil.

By preserving the integrity of the enclosing material of the dispensed fertilizer pouch up to subsurface deposition of said dispensed fertilizer pouch, fermentation gases and/or volatile components of the farm fertilizer can be at least partially introduced into the subsurface deposition region of soil with the dispensed fertilizer pouch. In particular, when said dispensed fertilizer pouch is unsealed below ground-level, the re-closing of overlying soil levels subsequent to the introduction of the dispensed fertilizer pouch into the subsurface deposition region of soil can limit the escape of volatile fertilizer components from the subsurface deposition region of soil. Furthermore, the partially unsealed fertilizer pouch can spatially define a liquid and/or farm fertilizer reservoir in the subsurface deposition region of soil constituting a release region for farm fertilizer during an extended amount of time. Particularly in the case of an inclined agricultural area or adverse weather conditions, the at least partially preserved structural integrity of the pouch may prevent farm fertilizer relocation within the soil and may thus favor root growth into the subsurface deposition region of soil associated with the fertilizer pouch.

In a preferred embodiment, the retrieval and dispensing section is configured to controllably dispense the retrieved fertilizer pouch based on a position of the subsurface injectors, in particular based on a traveled distance of an associated subsurface injector since the last selective dispensing of a fertilizer pouch.

For example, the dispensed fertilizer pouches may be dispensed according to a given frequency, wherein said frequency can depend on the movement speed of an agricultural implement used to deploy the farm fertilizer pouches, thereby defining a deploying density for said fertilizer pouches. The skilled person will however appreciate that said frequency may equally be adapted during deploying farm fertilizer to obtain a varying fertilizer deployment density based on an intended crop density or area specific fertilization requirement.

In a preferred embodiment, the system further comprises a position determining unit, wherein said retrieval and dispensing section is configured to trigger dispensing the fertilizer pouch introduced into the subsurface deposition region of soil based on a current position determined by the position determining unit, wherein said current position is the current position of one of the one or more subsurface injectors or the position of a component arranged in a known, in particular fixed, spatial relation to said one or more subsurface injectors.

For example, the system can determine the current position of the subsurface injectors using a locating component at or close to the subsurface injector or a corresponding agricultural implement carrying or pulling said subsurface injectors, such as GPS sensors, radiofrequency sensors coupled to a triangulation unit, machine-implemented picture recognition of terrain features, a speed and/or direction sensor of the agricultural implement, a combination thereof, or the like, and said determined current position may then be used to derive the current physical location of the subsurface injector with respect to the terrain, or a traveled distance with respect to a position of a preceding pouch deployment.

In a preferred embodiment, the system further comprises a position recording unit to record the position of the dispensed fertilizer pouch introduced into the subsurface deposition region of soil and/or the pre-determined amount of farm fertilizer enclosed in the dispensed fertilizer pouch.

Recording the position of the dispensed fertilizer pouch can allow selective planting of plants substantially aligned with the physical location of the deployed fertilizer pouch associated with a locally enhanced nutrient density.

In a preferred embodiment, the system further comprises an additive dispenser for dispensing additives and/or reagents into the subsurface deposition region, in particular together with the dispensed fertilizer pouch, preferably an additive conduit integrated with each of the one or more subsurface injectors, to dispense additives and/or reagents into the subsurface deposition region of soil.

The additives or reagents may be used to at least partially unseal said fertilizer pouch, such as by assisting a composting process of the enclosing material, and/or to combine and/or react with the farm fertilizer to promote plant growth.

In a preferred embodiment, the fertilizer pouches comprise an enclosing material to enclose said farm fertilizer, wherein the unsealing unit is configured to empty the dispensed fertilizer pouch, and wherein the system further comprises a recovery unit configured to prevent deposition of the enclosing material of the dispensed fertilizer pouch in the soil and to recover empty fertilizer pouches, e.g. in a recovery bin or onto a drum.

By recovering empty fertilizer pouches, at least partially non-compostable enclosing material or compostable material associated with long composting times can be used in conjunction with the deploying system. The empty fertilizer pouches may then be recycled, shredded and/or used in a firing plant or fermentation plant. In some embodiments, the pouch recovery unit is configured to retrieve an empty dispensed fertilizer pouch after said dispensed fertilizer pouches is introduced into the subsurface deposition region of soil by the subsurface injector.

In a preferred embodiment, the system further comprises a plurality of at least liquid permeable retainers, in particular wire netting, said retainers being arranged close to a bottom side of each subsurface injector to prevent the enclosing material of the dispensed fertilizer pouch to remain in the soil, while the dispensed fertilizer pouch is emptied in the subsurface deposition region of soil.

In a preferred embodiment, the recovery unit comprises at least one of a pneumatic device and a conveyor integrated with the subsurface injector to recover empty fertilizer pouches from the one or more subsurface injectors.

In some embodiments, the subsurface injectors comprise conveyors to introduce the fertilizer pouching into the subsurface deposition region of soil. In some embodiments, the conveyor is configured to retrieve the enclosing material of said fertilizer pouches from said subsurface deposition region of soil. For example, a conveyor may assist introduction of a dispensed fertilizer pouch into the subsurface region of soil and may then retrieve the dispensed fertilizer pouch after it is emptied in said subsurface region of soil.

In some embodiments, the system is implemented as part of an agricultural implement for crop farming, wherein said subsurface injectors are associated with a tilling element for agricultural farmland.

According to one solution of the invention, the system comprises a cultivator, and each subsurface injector comprises a tube arranged behind a tilling element of the cultivator, wherein said tilling element is in particular a shank or grubber. Each tube is configured to receive the dispensed fertilizer pouch and guide the dispensed fertilizer pouch to the subsurface deposition region of soil.

Thus, a dispensed fertilizer pouch introduced into the tube, such as by a hopper coupled to said tube, can be introduced into the subsurface deposition region of soil defined by the trail passed over by the tilling element, the introduction depth of said tilling element defining the depth at which said fertilizer pouch may be introduced into the subsurface deposition region of soil.

In a preferred embodiment, the tube comprises a permeable section at least in a portion of the tube arranged below ground level, the permeable section being liquid permeable at least in a trailing direction with respect to a tilling direction of the cultivator, said permeable section in particular comprising spaced bars or wire netting.

Said permeable section may allow relieving blockages of said tube by giving off said farm fertilizer and/or enclosing material towards the trailing soil sections via said permeable section.

In a preferred embodiment, each unsealing unit comprises a roller configured to unseal the dispensed fertilizer pouch using a protrusion and/or blade arranged on and/or opposite to the roller by one or more of puncturing, cutting, ripping and breaking the dispensed fertilizer pouch during a revolving motion of the roller, wherein said revolving motion causes and/or assists an engagement of said blade and/or protrusion with the dispensed fertilizer pouch, said roller being preferably arranged in a portion of the one or more subsurface injectors lying at or below the surface of the soil tilled by the cultivator.

Said roller may assist introducing said fertilizer pouches into said subsurface deposition region of soil by the revolving motion and may be driven by the motion of an associated agricultural implement or individually by a motor. In some embodiments, the roller is associated with flanking covers to limit wear of the roller during the tilling of soil. In some embodiments, the tube comprises a permeable section of spaced vertical bars, and at least a protrusion of said roller engages the dispensed fertilizer pouch through the permeable section.

In a preferred embodiment, the system further comprises a conveyor coupled to the roller to assist introduction of the dispensed fertilizer pouch into the subsurface deposition region of soil and/or configured to retrieve emptied fertilizer pouches from the subsurface deposition region.

Thus, the dispensed fertilizer pouch may be emptied in the subsurface deposition region of soil and then retrieved into a recovery bin by an integrated mechanical system.

In some embodiments, the system further comprises a seed dispensing mechanism to dispense seeds into the soil at a seed planting depth, wherein said seed planting depth is arranged above the subsurface region of soil.

Preferably, the seed dispensing mechanism is functionally separated from the one or more subsurface injectors, such as to avoid deposition of seeds in the subsurface region of soil with the farm fertilizer. For example, a separate seed guiding conduit may be arranged at a trailing end of the one or more subsurface injectors, such as to deposit seeds in a trailing shallow soil region, e.g. in a soil region in the trailing direction and at the seed planting depth, when the one or more subsurface injectors are used to perform a tilling of the soil.

In some embodiments, the seed dispensing mechanism is arranged behind the one or more subsurface injectors along the trailing direction, wherein the seed dispensing mechanism is separated from the one or more subsurface injectors, such that seeds are dispensed at the seed planting depth when the soil has been closed behind the one or more subsurface injectors.

For example, the seed dispensing mechanism may comprise a separate tilling element or the seed guiding conduit may be configured to open and/or penetrate the soil up to the seed planting depth.

In some embodiments, the system is used for deploying farm fertilizer pouches onto grassland. The need for preserving the integrity of the turf usually limits the possibilities for tilling and is therefore conventionally not compatible with subsurface deposition of fertilizer. However, the present system may be adapted to likewise be used in conjunction with farm fertilizer deployment on grassland by controllably injecting fertilizer pouches.

According to another solution of the invention, said subsurface injectors each comprise a puncturing head, wherein the system is configured to introduce the dispensed fertilizer pouch into the subsurface deposition region of soil during a vertical pouch implantation stage of said subsurface injectors. The subsurface injectors are configured to penetrate the soil surface with the puncturing head of the subsurface injector, release the dispensed fertilizer pouch into the subsurface deposition region of soil, and retract the puncturing head above the soil surface.

By controllably introducing and retracting said subsurface injectors, farm fertilizer pouches may be introduced into the subsurface deposition region of soil at a selected puncturing position. Thus, the system can be used to introduce farm fertilizer into a subsurface deposition region of soil of grassland with limited damage to the interconnected turf.

In a preferred embodiment, the puncturing head is operable to displace soil in the subsurface deposition region of soil.

For example, the puncturing head may comprise a segmented bottom section comprising at least one displaceable portion, said displaceable portion being displaceable or rotatable to laterally displace soil in the subsurface deposition region of soil and thereby allow introduction of the fertilizer pouch into said subsurface deposition region of soil.

In a preferred embodiment, an unsealing unit is configured to at least partially unseal the dispensed fertilizer pouch synchronously with the vertical subsurface injection sequence of the subsurface injectors allowing said fertilizer pouch to give off said farm fertilizer into the subsurface deposition region of soil, wherein the unsealing unit in particular comprises unsealing members at or close to said puncturing head of each subsurface injector.

For example, the unsealing unit may be integrated with the puncturing head and may be operated with the puncturing head to release and subsequently or simultaneously unseal the fertilizer pouch in the subsurface deposition region of soil, such as by integrating puncturing, crushing or cutting devices within said puncturing head. Additionally, the puncturing head may be operable to release and subsequently or simultaneously crush the fertilizer pouch. In accordance with previously described embodiments, said puncturing head may further comprise retaining elements for retaining the enclosing material and/or may be combined with pneumatic suction devices to retrieve the enclosing material from said subsurface deposition region of soil.

In some embodiments, the unsealing unit is configured to at least partially unseal fertilizer pouches having an outer material layer and an inner material layer, wherein the unsealing unit comprises a first unsealing member and a second unsealing member, wherein the first unsealing member at least partially unseals an outer material layer of the fertilizer pouch, and the second unsealing member at least partially unseals an inner material layer of the fertilizer pouch. For example, the first unsealing member may comprise a shallow puncturing and/or cutting element to release a first substance enclosed by the outer material layer, and the second unsealing member may subsequently and/or synchronously unseal the inner material layer to release a second substance enclosed by the inner material layer of the fertilizer pouch. The first substance may comprise an additive or granular component, such as to react with and/or inhibit relocation of the farm fertilizer in the subsurface deposition region of soil, and the second substance may be farm fertilizer.

Thus, the first substance may be introduced into the subsurface region of soil synchronously with the second substance, such as to provide sequentially arranged and/or overlapping pockets of predetermined amounts of the first substance and the second substance in the subsurface deposition region of soil.

In some embodiments, the unsealing unit is configured to at least partially unseal fertilizer pouches having an outer material layer and an inner material layer, the outer material layer enclosing a first substance and the second material layer enclosing a second substance, such that a release rate for the first substance and the second substance into the subsurface deposition region of soil is different, and in particular higher for the first substance.

In some embodiments, the system is configured as a portable farm fertilizer deployment system for deploying farm fertilizer on grassland comprising a subsurface injector with a puncturing head. Preferably, said portable farm fertilizer deployment system comprises a handle to be operable by a human operator and configured to enable piercing a soil surface with the puncturing head. A latch may be integrated with a retrieval and dispensing section of the portable farm fertilizer deployment system to dispense a fertilizer pouch into the subsurface region of soil in a controllable manner. The retrieval and dispensing section may be operated by a switch arranged at or close to the handle.

In a preferred embodiment, the system further comprises a separating grid to separate the plurality of fertilizer pouches from the hold into sequentially laid out fertilizer pouches, wherein said separating grid is preferably configured to orient said fertilizer pouches and is most preferably driven with an ondulating motion to assist separation of said fertilizer pouches into said sequentially laid out fertilizer pouches.

Following said separation of said fertilizer pouches, a conveyor may be used to transfer said sequentially advancing fertilizer pouches towards the subsurface injectors.

In a preferred embodiment, the system further comprises a drum to hold a string of mechanically connected fertilizer pouches rolled up on said drum.

In a preferred embodiment, the system further comprises a separation unit to separate individual fertilizer pouches from said string of connected fertilizer pouches. Additionally or alternatively, the system may further comprise a recovery drum to recover the connected fertilizer pouches after said farm fertilizer is given off into said subsurface deposition region of soil.

In some embodiments, the system comprises a sensor to detect a fertilizer pouch retrieved from the hold and/or to synchronize the separation unit with the operation of the retrieval and dispensing section.

In a second aspect, the invention relates to a method for deploying farm fertilizer enclosed in fertilizer pouches with an agricultural implement, using a system according to any one of the embodiments of the first aspect, said fertilizer pouches each enclosing a pre-determined amount of said farm fertilizer. The method further comprises retrieving and dispensing a fertilizer pouch from a reservoir containing a plurality of fertilizer pouches in a controllable manner, and introducing the pre-determined amount of said farm fertilizer into a subsurface region of soil.

In preferred embodiments, the method further comprises receiving a fertilizer pouch dispensed from said reservoir, introducing said dispensed fertilizer pouch into the subsurface deposition region of soil.

For example, said agricultural implement may comprise one or more subsurface injectors and the method may comprise operating said one or more subsurface injectors to introduce said dispensed fertilizer pouch into the subsurface deposition region of soil.

In preferred embodiments, the method further comprises at least partially unsealing said dispensed fertilizer pouch allowing said fertilizer pouch to give off said farm fertilizer into the subsurface deposition region of soil.

Preferably, said agricultural implement comprises at least one unsealing unit and the method comprises operating said unsealing unit to at least partially unseal the dispensed fertilizer pouch.

In a preferred embodiment, the method further comprises the steps of penetrating a soil surface with a puncturing head and advancing said puncturing head into said subsurface deposition region of soil, releasing said dispensed fertilizer pouch into said subsurface deposition region of soil, and retracting said puncturing head above the soil surface after releasing said dispensed fertilizer pouch.

In other preferred embodiments, the method further implements or uses the functionality of any one of the preceding systems for deploying farm fertilizer according to the first aspect.

### DETAILED DESCRIPTION OF EMBODIMENTS

The features and numerous advantages of the system and method according to the present invention will best be understood from a detailed description of preferred embodiments with reference to the accompanying drawings, in which:
- Fig. 1: shows a schematic overview of a system for deploying prepackaged farm fertilizer according to an example;
- Fig. 2: schematically illustrates an agricultural implement for deploying packaged farm fertilizer according to an example;
- Fig. 2B: illustrates a cross sectional view of the hold of the agricultural implement schematically depicted in Fig. 2A;
- Fig. 2C: illustrates a detail view of a separating grid for a hold according to an example;
- Fig. 3A: illustrates a detail view of the retrieval and dispensing section and a subsurface injector associated therewith according to an example;
- Fig. 3B: illustrates a cross sectional view of a guiding section of a subsurface injector with a permeable section according to an example;
- Fig. 3C: illustrates a detail view of the bottom section of a subsurface injector with a controllable dispensing mechanism according to an example;
- Fig. 4: illustrates a perspective view of a system deploying several farm fertilizer pouches in parallel according to an example;
- Fig. 5: illustrates a detail view of a subsurface injector configured to retrieve enclosing material of fertilizer pouches according to an example;
- Fig. 6A: illustrates a string of fertilizer pouches partially rolled up on a drum;
- Fig. 6B: illustrates a segmented drum for segmented storage of rolled up strings of fertilizer pouches according to an example;
- Fig. 6C: illustrates storing a folded string of fertilizer pouches in a hold of an agricultural implement according to an example;
- Fig. 7A: illustrates an example of a subsurface injector configured to singulate a string of fertilizer pouches;
- Fig. 7B: illustrates an example of a subsurface injector configured to retrieve a string of empty fertilizer pouches;
- Fig. 8: illustrates a hold configuration suitable for utilization with a subsurface injector as depicted in Fig. 7B;
- Figs. 9A, 9B: illustrate two exemplary configurations for systems for deploying farm fertilizer stored in a string of fertilizer pouches;
- Fig. 10: illustrates a configuration and operation of a subsurface injector suitable for use with grassland according to an example;
- Fig. 11: illustrates another subsurface injector suitable for use with grassland according to an example;
- Fig. 12: illustrates a parallel injection device for subsurface injectors suitable for use with grassland according to an example;
- Figs. 13A, 13B: illustrate an agricultural implement in two stages of a process for deploying farm fertilizer and concurrent anchoring of the agricultural implement in a hillside location according to an example;
- Fig. 14: illustrates a portable farm fertilizer deployment system manually operable for deploying prepackaged farm fertilizer according to an example;
- Fig. 15A: illustrates an example of a subsurface injector comprising an additive conduit according to an example;
- Fig. 15B: illustrates another example of an subsurface injector comprising an additive conduit and suitable for use with grassland according to an example;
- Fig. 16: schematically illustrates a method for deploying farm fertilizer enclosed in fertilizer pouches according to an example;
- Fig. 17: illustrates a detail view of an example of a system for deploying farm fertilizer comprising sensors for scanning and tracking fertilizer pouches;
- Fig. 18A: schematically illustrates an example of a filling system for fertilizer pouches;
- Fig. 18B: schematically illustrates an example of a big pack for packaging a plurality of fertilizer pouches identified with a batch identifier; and
- Fig. 18C: schematically illustrates a drum with a batch identifier for holding a string of fertilizer pouches according to an example.

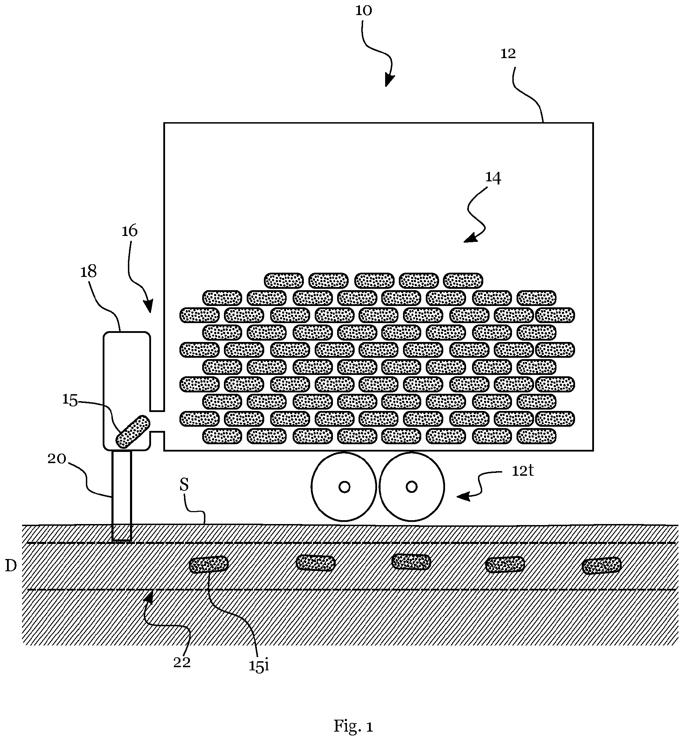

Fig. 1 shows a schematic overview of a system 10 for deploying prepackaged farm fertilizer according to an example. The system 10 comprises a hold 12 configured to contain a plurality of fertilizer pouches 14 each containing a predetermined amount of (semi-)liquid farm fertilizer. The hold 12 is coupled to a retrieval and dispensing section 16 comprising a pouch dispenser 18 for retrieving and dispensing a fertilizer pouch 15 towards a subsurface injector 20. The illustrated system 10 is configured as a drawbar trailer comprising supporting tires 12t and configured to be towed by an agricultural implement, such as a tractor.

In operation, the subsurface injector 20 is at least partially inserted below a soil surface S into a subsurface deposition region of soil 22 which may be located around 20 cm below the soil surface S and in the following is referred to as "deposition region" 22 solely for the sake of brevity, wherein the depth may be defined with respect to the surface S before or after the injection of said dispensed fertilizer pouch 15. The subsurface injector 20 is configured to receive the dispensed pouch 15 and subsequently insert the dispensed pouch 15 into the deposition region 22 as an injected fertilizer pouch 15i giving off farm fertilizer to the surrounding soil region, wherein an unsealing unit integrated with the system 10 (not shown in Fig. 1 but shown in the following figures) at least partially unseals the dispensed fertilizer pouch 15 to controllably give off farm fertilizer during and/or subsequent to injection.

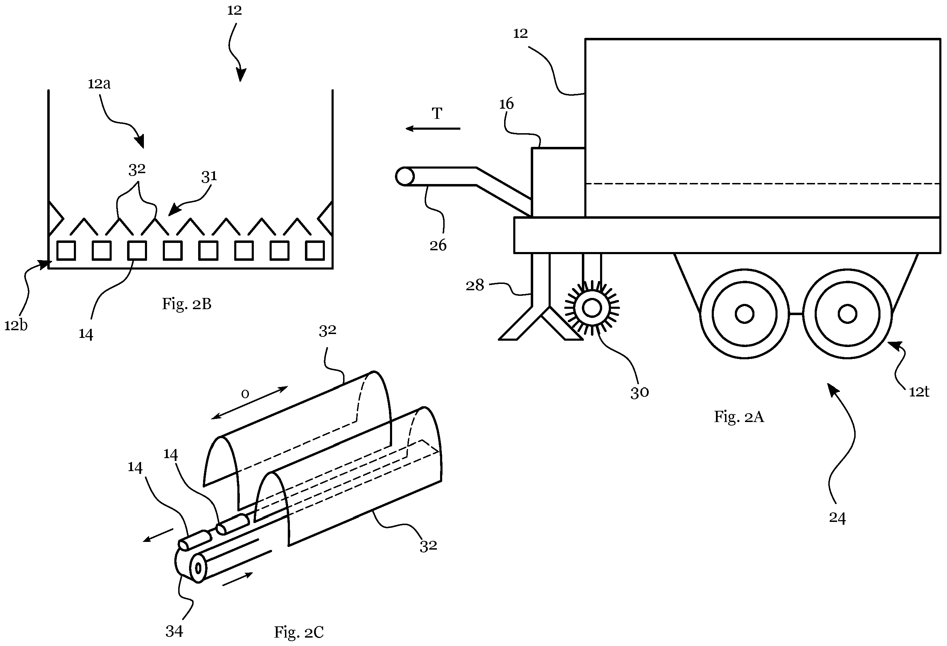

Fig. 2A illustrates an agricultural implement 24 as an example of a system 10 for deploying packaged farm fertilizer. The agricultural implement 24 comprises a hold 12 for containing the fertilizer pouches 14 and is configured, similar to the example of Fig. 1, as a drawbar trailer comprising tires 12t and a drawbar 26 to be towed along a towing direction T.

A retrieval and dispensing section 16 retrieves and dispenses fertilizer pouches 14 from the hold 12 towards a subsurface injector 20, in this example schematically depicted as a grubber 28 of a cultivator. The dispensed fertilizer pouch 15 is subsequently at least partially unsealed by an unsealing unit 30 depicted as a roller with puncturing protrusions to puncture and thereby at least partially unseal said dispensed fertilizer pouch 15 introduced into the deposition region 22. In the illustrated agricultural implement 24, the grubber 28 is arranged in front of the hold 12 and behind the drawbar 26, but the grubber 28 may equally be arranged behind the hold 12 at a trailing side of the agricultural implement 24, although, solely for the sake of brevity and without loss of generality, in the following only embodiments will be illustrated, wherein the subsurface injectors 20 are arranged close to a front side of the agricultural implement 24.

Fig. 2B illustrates a cross sectional view of the hold 12 of the agricultural implement 24 schematically depicted in Fig. 2A. The hold 12 comprises an upper portion 12a and a lower portion 12b separated by a separating grid 31 for implementing a sorting section for the fertilizer pouches 14. The spacing of separating elements 32 of the separating grid 31 preferably corresponds substantially to a width of the fertilizer pouches 14, such that fertilizer pouches 14 dropping from the upper portion 12a towards the lower portion 12b are singulated and/or oriented by the separating grid 31 into rows of fertilizer pouches 14 in the lower portion 12b. Thus, fertilizer pouches 14 may be stored and transported in "big packs" containing a large number of fertilizer pouches 14 and may be dropped into the hold 12 with a chute (not shown). The separating grid 31 can then sort and/or orient the unsorted plurality of fertilizer pouches 14 in the upper portion 12a of the hold 12 into ordered streams of laid out fertilizer pouches 14.

Fig. 2C illustrates a preferred example wherein the separating elements 32 comprise curved sheets 32 oriented to face the upper portion 12a with a curved middle portion of said curved sheets 32 to limit a risk of structural damage to fertilizer pouches 14 contained in the upper portion 12a of the hold 12. A conveyor 34 (only partially shown) may be provided in the lower portion 12b of the hold 12 to transport the fertilizer pouches 14 separated and/or oriented by said adjacent curved sheets 32 towards the subsurface injectors 20. To assist sorting and/or orienting of the fertilizer pouches 14 from the upper portion 12a of the hold 12, the separating elements 32 may be driven by an ondulating motion O, such as an ondulating motion O along a longitudinal direction of said separating elements 32, for example along the plane of projection of Fig. 2B. Preferably, the separating elements 32 are oriented along the longitudinal direction of the agricultural implement 24, such that separated and/or oriented fertilizer pouches 14 are substantially aligned with the movement direction of said agricultural implement 24 during farm fertilizer deployment.

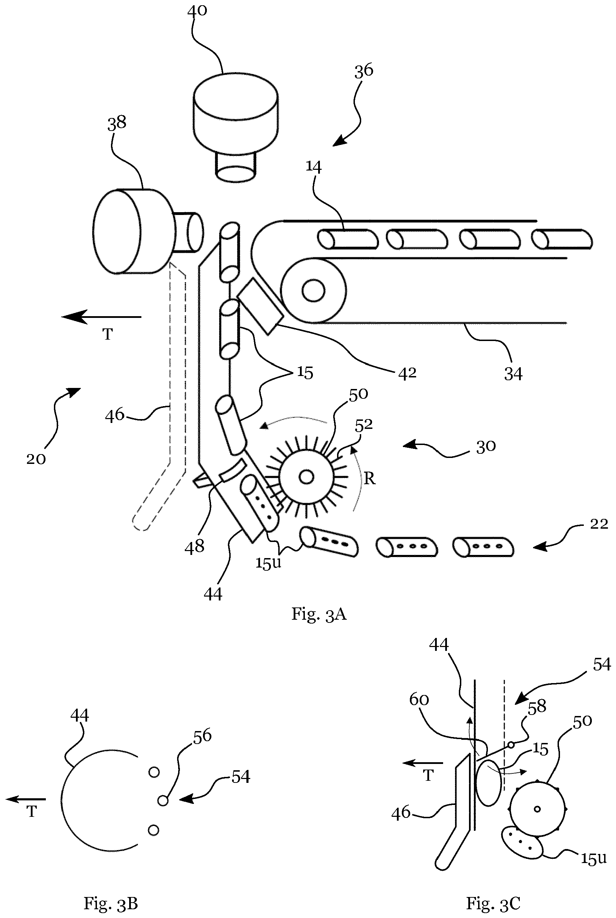

Fig. 3A illustrates a schematic detail view of the retrieval and dispensing section 16 and a corresponding subsurface injector 20 according to an example. The conveyor 34 retrieves fertilizer pouches 14 from the hold 12 towards a pouch dispensing section 36 comprising a pneumatic suction device 38 and a pneumatic discharge jet device 40 for retrieving a selected fertilizer pouch 14 from the conveyor 34 and dispensing it via baffle 42 towards the subsurface injector 20. The subsurface injector 20 comprises a guiding section 44 and a shank 46, such as a grubber 28, configured to till soil during a movement of the subsurface injector 20 along the tilling direction T. The guiding section 44 guides the dispensed fertilizer pouch 15 from the retrieval and dispensing section 16 towards the deposition region 22. An adjustable cutting blade 48 at the guiding section 44 and/or a roller 50 with puncturing protrusions 52 can be arranged close to the deposition region 22 to at least partially unseal the dispensed fertilizer pouch 15. The at least partially unsealed fertilizer pouch 15u is then guided by the revolving motion R of the roller 50 towards the deposition region 22 to give off farm fertilizer towards a surrounding region of soil. The adjustable cutting blade 48 and/or an adjustable spacer arranged opposite to the roller 50 may be adjusted to control a dispense speed for farm fertilizer from the at least partially unsealed fertilizer pouches 15u into the deposition region 22 and/or to adapt the unsealing unit 30 to different diameters of the fertilizer pouches 14.

The at least partial unsealing of the dispensed fertilizer pouches 15 at or close to the deposition region 22 limits leakage of farm fertilizer and in particular volatile components of said farm fertilizer into components of the agricultural implement 24, onto the soil surface S and/or into upper soil regions. Thus, in some embodiments the unsealing unit 30 is arranged at or close to the deposition region 22 to limit the leakage of farm fertilizer. However, in some embodiments, wear to the unsealing unit 30 during the tilling of soil is limited by at least partially unsealing a dispensed fertilizer pouch 15 close to or above the soil surface S, such as puncturing fertilizer pouches 14 above the soil surface S. In some embodiments, different components of the unsealing unit 30 are arranged on different height levels, for example in an unsealing unit 30 comprising a puncturing device above the soil surface S and an adjustable cutting blade 48 below the soil surface S.

In Fig. 3A the guiding section 44 is schematically illustrated by a guiding plate arranged behind the shank 46. In preferred and in the following described examples, the guiding section 44 is at least partially tubular, such as a tube arranged behind the shank 46, to assist introduction of the dispensed fertilizer pouch 15 into the deposition region 22.

Fig. 3B illustrates a cross sectional view of a guiding section 44 according to an example in a portion thereof which lies close to or below the soil surface S when the subsurface injector 20 is in operation. As illustrated in Fig. 3A, the guiding section 44 can be provided with an at least partially permeable section 54 comprising spaced bars 56 or wire netting in a trailing direction of the subsurface injector 20. In the event of a blockage of the guiding section 44 or inadvertent damage to an enclosing material of the fertilizer pouch 14 in the guiding section 44, the at least partially permeable section 54 allows giving off blocking material accumulating in and occluding the guiding section 44 to automatically relieve the subsurface injectors 20 of blockages.

Fig. 3C illustrates a detail view of the bottom section of a subsurface injector 20 according to an example. The subsurface injector 20 comprises a shank 46 behind which, in a trailing direction with respect to the tilling direction T, the guiding section 44 of the subsurface injector 20 is arranged. The guiding section 44 comprises an at least partially permeable section 54 (schematically illustrated by a dashed line), such as the permeable section 54 illustrated in Fig. 3 B. Inside of the guiding section 44 a controllable dispensing mechanism 58 is arranged comprising a rotatable retaining finger 60 to retain and controllably dispense the fertilizer pouches 15. By rotating the retaining finger 60, the fertilizer pouches 15 may be dispensed in a controlled manner towards the roller 50 to be at least partially unsealed close to the deposition region 22. The controllable dispensing mechanism 58 controls the rotation of the retaining finger 60 and may selectively trigger dispensing of a fertilizer pouch 15 based on a dispensing command/or at a given or predetermined frequency. Thus, by operating the controllable dispensing mechanism 58, the density of dispensed and unsealed fertilizer pouches 15u in the deposition region 22 may be deterministically controlled.

The skilled person will appreciate that Figs. 3A and 3C illustrate a plurality of controllable dispensing mechanisms 58 which may individually or in combination perform the controllable dispensing function of the dispensing section 36 in embodiments. For example, a controllable dispensing of fertilizer pouches 14 may be achieved with a controllable conveyor belt speed of the conveyor belt 34, thereby providing a controllable dispensing frequency of fertilizer pouches 14 retrieved from the hold 12. Independently, the pneumatic suction device 38 may retrieve and dispense fertilizer pouches 14 by controllably picking and dispensing fertilizer pouches 14 from the conveyor 34 using a modulation of air pressure. In addition, a pneumatic discharge jet device 40 may controllably control injection of a fertilizer pouch 14 via the subsurface injector 20 into the deposition region 22. Naturally, a controllable dispensing mechanism 58 for controllably dispensing a dispensed fertilizer pouch 15 may comprise any combination of the controllable dispensing mechanisms 58 illustrated in Figs. 3A and 3C. Preferably, one element of said controllable dispensing mechanism 58 is arranged at or close to the subsurface injector 20, such that a precision or regularity of deposition of the dispensed fertilizer pouch 15 can be high.

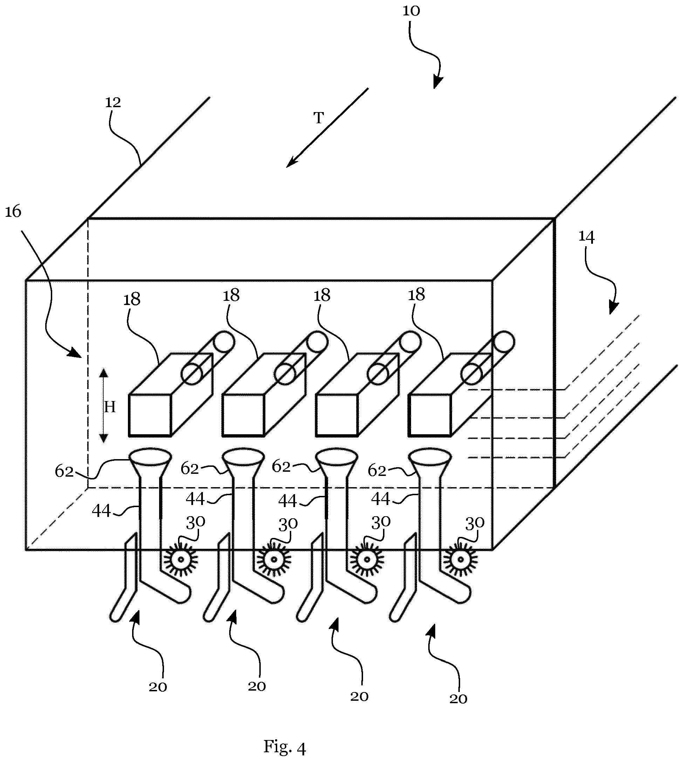

Fig. 4 illustrates a schematic perspective view of a related system 10 for deploying farm fertilizer enclosed in fertilizer pouches 14 stored in a hold 12 according to an example. The stored fertilizer pouches 14 are schematically depicted with dashed lines, indicating a stacked storage of several layers of fertilizer pouches 14. A retrieval and dispensing section 16 comprising a plurality of pouch dispensers 18 is arranged transverse to the towing direction T of the system 10 and is configured to be displaceable at least along a height direction H to allow retrieving fertilizer pouches 14 stored at a corresponding height level within the hold 12. The retrieved fertilizer pouches 14 are dispensed into hoppers 62 coupled to corresponding subsurface injectors 20, wherein each subsurface injector 20 comprises a corresponding unsealing element 30 (depicted as a roller 50 with puncturing protrusions 52).

A sensor (not shown) may also track a retrieval and/or a dispensing of fertilizer pouches 14, such as to count the number of dispensed fertilizer pouches 15 and may be coupled to a control system to notify an operator of the number of dispensed fertilizer pouches 15, which can be used to track a filling level of the hold 12.

During operation, the retrieval section 16 can operate the pouch dispensers 18 to synchronously retrieve and dispense fertilizer pouches 14 towards the corresponding subsurface injectors 20 such that the system may deposit fertilizer pouches 15 along parallel tilling lines in the soil. Thus, an operational width comparable to conventional soil tilling with a cultivator can be achieved by providing a plurality of pouch dispensers 18 in the retrieval and dispensing section 16, wherein each pouch dispenser 18 is coupled to a corresponding subsurface injector 20 comprising a tilling element, such as a shank 46 or grubber 28, of said cultivator to introduce fertilizer pouches 14 in deposition regions 22 defined by the tilling of soil by the cultivator in parallel. The subsurface injectors 20 are not depicted in correct perspective to better illustrate the respective components in the illustrated example. In embodiments, the guiding sections 44 should however be aligned with, i.e. arranged behind, a tilling element of a cultivator along the towing direction T.

When the enclosing material of fertilizer pouches 14 is made of compostable/bio-degradable material, the enclosing material can be deposited with the farm fertilizer into the deposition region 22. However, as an alternative to a deposition of the dispensed fertilizer pouches 15 in the deposition region 22, the system 10 or the agricultural implement 24 may also be configured to retrieve the enclosing material of the fertilizer pouches 14 after the farm fertilizer is given off in said deposition region 22.

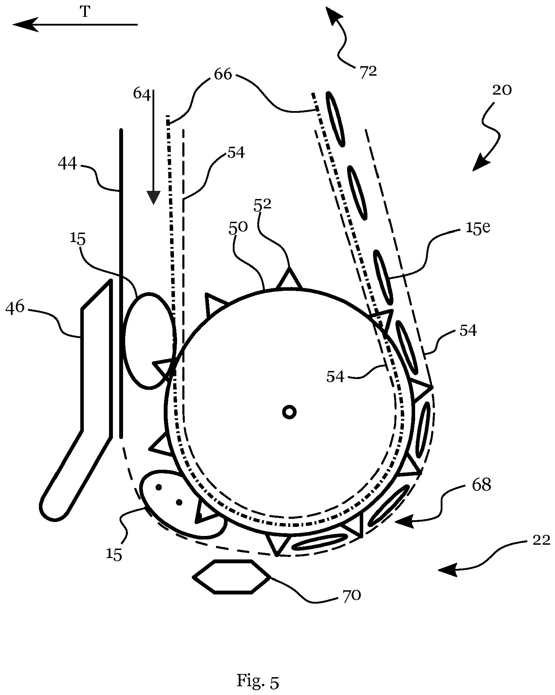

Fig. 5 illustrates a detail view of a subsurface injector 20 of a system 10 configured to retrieve enclosing material of dispensed fertilizer pouches 15 according to an example. The dispensed fertilizer pouches 15 are introduced along the injection direction 64, wherein said injection is assisted by a conveyor 66 (depicted with partially dashed lines for better illustration) coupled to a roller 50 with puncturing protrusions 52, said roller 50 providing an unsealing unit 30 and being arranged behind a shank 46 of a cultivator below the soil surface S close to the deposition region 22. A revolving motion R of the roller 50 can in principle be driven by the conveyor 66. A wire netting 54 restraints the path of the dispensed fertilizer pouch 15 and is configured to prevent dispensed fertilizer pouches 15 from remaining in the deposition region 22.

In operation, a dispensed fertilizer pouch 15 injected along the injection direction 64 can come in contact with the roller 50 and can be engaged by the puncturing protrusions 52 thereby at least partially unsealing said dispensed fertilizer pouch 15 and/or guiding said dispensed fertilizer pouch 15 along a path around the circumference of the roller 50. Along said path, the dispensed fertilizer pouch 15 gives off farm fertilizer into the deposition region 22 as a substantially localized farm fertilizer pocket 70. Close to the roller 50, the wire netting 54 may define a narrow section 68 to squeeze the dispensed fertilizer pouch 15 to assist the deposition of farm fertilizer to the deposition region 22. The empty fertilizer pouches 15e can then be retrieved by the conveyor 66 towards a recovery bin 72 above the soil surface S.

In this way, the system 10 can be compatible with at least partially non-compostable enclosing material or material with long composting times or can enable reuse of said enclosing material of the empty fertilizer pouches 15e subsequent to deployment of the farm fertilizer.

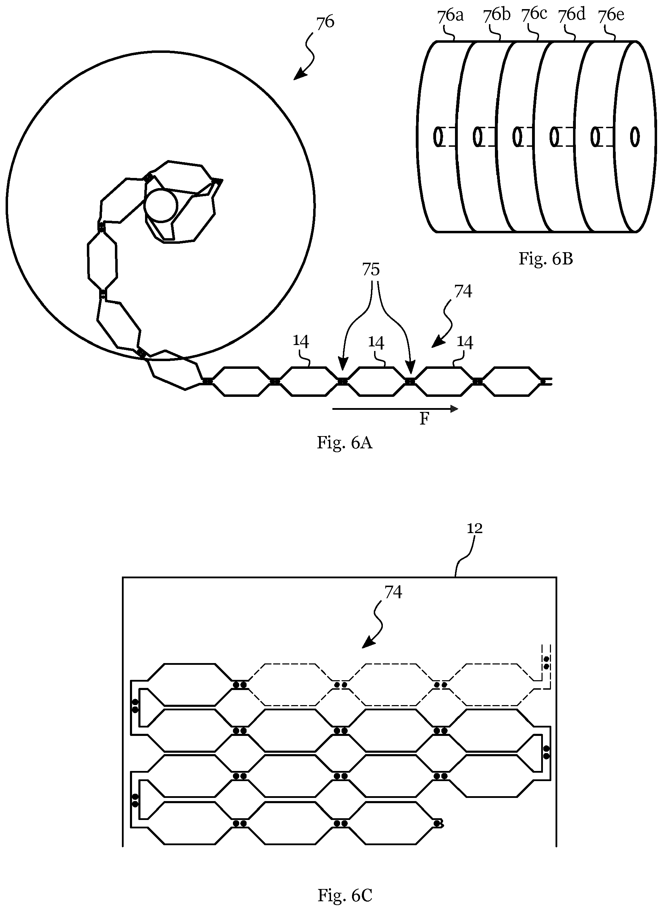

Figs. 6A, 6B and 6C illustrate an alternative way of storing and/or providing fertilizer pouches 14 according to an example. In Fig. 6A, individual fertilizer pouches 14 enclosing a predetermined amount of farm fertilizer are interconnected as a string 74 of fertilizer pouches 14 divided by separating segments 75. In preferred embodiments, the separating segments 75 prevent farm fertilizer exchange between adjacent fertilizer pouches 14 and/or are made of substantially the same material as the enclosing material of the fertilizer pouches 14.

Storing farm fertilizer pouches 14 as a string 74 of fertilizer pouches 14 may facilitate handling of fertilizer pouches 14 during transport, retrieval and/or subsurface injection of farm fertilizer. For example, and as shown in Fig. 6A, the string 74 of fertilizer pouches 14 may be rolled up onto a drum 76 to collectively handle a plurality of fertilizer pouches 14. Fertilizer pouches 14 may be retrieved from the drum 76 by pulling on the string 74 of fertilizer pouches 14 along the feeding direction F.

As illustrated in Fig. 6B a plurality of drums 76a-76e can be aligned in parallel to form a segmented storage of rolled up strings 74 of fertilizer pouches 14. Each drum 76a-76e may then independently provide a feed of fertilizer pouches 14 for a corresponding subsurface injector 20 for parallel deployment of farm fertilizer pouches 14. However, the system 10 may also comprise a sensor (not shown) to track fertilizer pouches 14 retrieved from the hold 12 and may accordingly switch between drums 76a-76e when an actively unrolled drum 76a-76e is determined to have been fully unrolled or may notify an operator to switch said actively unrolled drum 76a-76e.

As an alternative storage configuration, Fig. 6C illustrates folding up the string 74 of fertilizer pouches 14 in a hold 12, thereby storing a string 74 of fertilizer pouches 14 independently of a drum 76. The folded string 74 of fertilizer pouches 14 may equally be retrieved from the hold 12 by engaging one end of the string 74 with the conveyor 34 and thus retrieving fertilizer pouches 14 from the hold 12 according to the sequence of fertilizer pouches 14 given by the string 74 of fertilizer pouches 14.

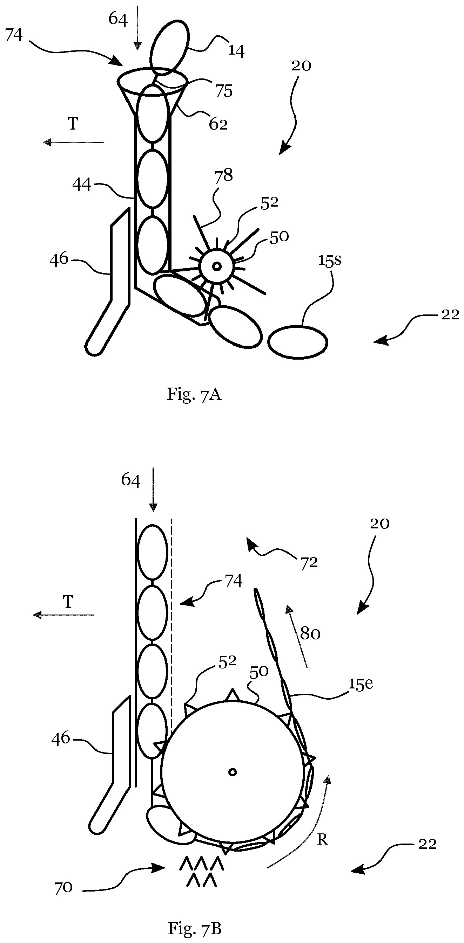

Fig. 7A and 7B illustrate two schematic examples of subsurface injectors 20 operated with a string 74 of fertilizer pouches 14.

In Fig. 7A, the string 74 of fertilizer pouches 14 is introduced into a hopper 62 associated with the subsurface injector 20 to provide a sequence of sequentially advancing fertilizer pouches 14 separated by separating segments 75. The fertilizer pouches 14 advance via a guiding section 44 of the subsurface injector 20 arranged behind a shank 46 towards a roller 50. The roller 50 is equipped with separating blades 78, said separating blades 78 being distributed around the circumference of the roller 50 at substantially equal spacing. During a revolving motion R of the roller 50, the separating blades 78 engage the separating segments 75 to cut the separating segments 75 and thereby singulate individual fertilizer pouches 14 from the string 74 of fertilizer pouches 14. In the illustrated example, the roller 50 is further equipped with puncturing protrusions 52 to at least partially unseal the separated fertilizer pouches 15s. Thus, fertilizer pouches 14 from the string 74 of fertilizer pouches 14 may be singulated and distributed controllably in the deposition region 22. The skilled person will however appreciate that the singulation of the fertilizer pouches 14 can be performed independently of the unsealing of the fertilizer pouches as well as performed at any stage between the hold 12 and the deposition region of soil 22, such as in the retrieval and dispensing section 16.

Fig. 7B illustrates another example of a subsurface injector 20 operated with a string 74 of fertilizer pouches 14, wherein fertilizer pouches 14 are retrieved after giving off farm fertilizer into a pocket of farm fertilizer 70 in the deposition region 22. In this example, the subsurface injector 20 is not equipped with any singulating unit, such as the separating blades 78, but the string 74 of fertilizer pouches 14 rather loops around a roller 50 towards a recovery bin 72 along a path following the revolving motion R of the roller 50 towards the retrieval direction 80.

In operation, the revolving motion R of the roller 50 pulls the string 74 of fertilizer pouches 14 from the hold 12 towards the deposition region 22. Fertilizer pouches 14 contacting the roller 50 can be squeezed by the mechanical engagement and/or punctured by puncturing protrusions 52 arranged on the roller 50 to give off farm fertilizer into a pocket of farm fertilizer 70 in the deposition region 22. The empty fertilizer pouches 15e can then be retrieved as a string 74 of empty fertilizer pouches 15e towards a recovery bin 72.

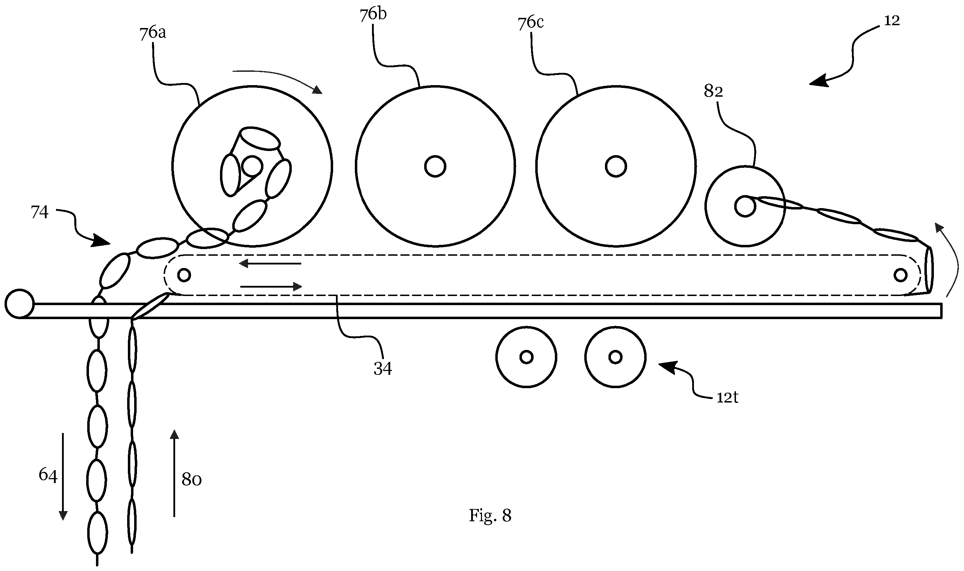

Fig. 8 illustrates a hold configuration 12 suitable for utilization with a subsurface injector 20 for a string 74 of fertilizer pouches 14 as depicted in the example of Fig. 7B. The hold 12 comprises a plurality of drums 76a-c for storing strings 74 of fertilizer pouches 14 and a recovery drum 82 arranged above a conveyor 34. The drums 76a-c are unrolled to provide strings 74 of fertilizer pouches 14 fed via the conveyor 34 and along the injection direction 64 towards the subsurface injectors 20 to introduce farm fertilizer into the deposition region 22 at or below the soil surface S (not shown, but shown in Fig. 7B). After giving off the farm fertilizer enclosed in the fertilizer pouches 14 of the string 74 of fertilizer pouches 14, empty fertilizer pouches 15e are recovered as a string 74 of empty fertilizer pouches 15e along the retrieval direction 80. The conveyor 34 advances the string 74 of empty fertilizer pouches 15e towards the recovery drum 82 to roll up the interconnected empty fertilizer pouches 15e in the hold 12.

In Fig. 8, the string 74 of fertilizer pouches is supplied towards a front of the hold 12 with respect to the towing direction T. However, the string 74 of fertilizer pouches 14 may equally be supplied towards the back of the hold 12 without loss of generality. In this case, the arrangement of the drums 76a-c and the conveyor 34 may be modified accordingly.

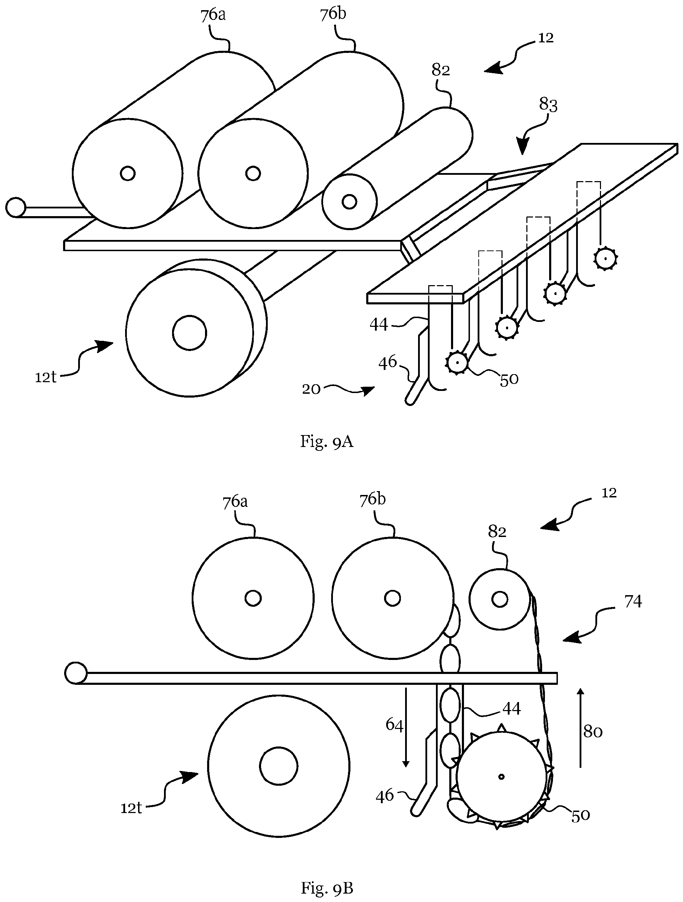

For example, in Figs. 9A, 9B two exemplary configurations for systems 10 for deploying farm fertilizer with fertilizer pouches 14 supplied towards the back of a hold 12 are schematically illustrated, wherein said systems 10 each comprise drums 76a, 76b for storing strings 74 of fertilizer pouches 14 and a recovery drum 82 for retrieving empty fertilizer pouches 15e.

In Fig. 9A, a plurality of subsurface injectors 20 (only one subsurface injector 20 provided with reference signs) are connected to a hold 12 via a hinge 83, such as a three-point hinge, wherein the subsurface injectors 20 are illustrated with shanks 46 arranged in front of guiding sections 44 and comprising a roller 50 close to the deposition region 22. The hinge 83 may control a relative insertion depth of the subsurface injectors 20 to establish a depth of the deposition region 22. For example, the hinge 83 may be pneumatically driven to modulate a relative height of the subsurface injectors 20 with respect to the hold 12. The recovery drum 82 is arranged close to a rear of the hold 12 to retrieve a string 74 of empty fertilizer pouches 15e (not shown) from the subsurface injectors 20. In operation, said drum 76a, 76b may be unrolled to supply said string 74 of fertilizer pouches 14 towards the subsurface injectors 20 while a string 74 of empty fertilizer pouches 15e may be retrieved to be rolled up onto the recovery drum 82 (not shown).

Fig. 9B illustrates another exemplary configuration of a system 10, wherein a subsurface injector 20 is integrated beneath the hold 12, with a recovery drum 82 arranged at or close to a rear side of the subsurface injector 20. In this way, a string 74 of empty fertilizer pouches 15e may be retrieved behind the subsurface injectors 20, thereby spatially separating and limiting an interference of the string 74 of empty fertilizer pouches 15e and a string 74 of retrieved fertilizer pouches 14.

The system 10 or agricultural implement 24 for deployment of farm fertilizer enclosed in fertilizer pouches 14 may also be used independently of a tilling of soil, such as in the case of deployment of farm fertilizer on grassland. The interconnected turf on grassland can restrict such tilling due to mechanical resistance as well as disadvantageous damage to the roots.

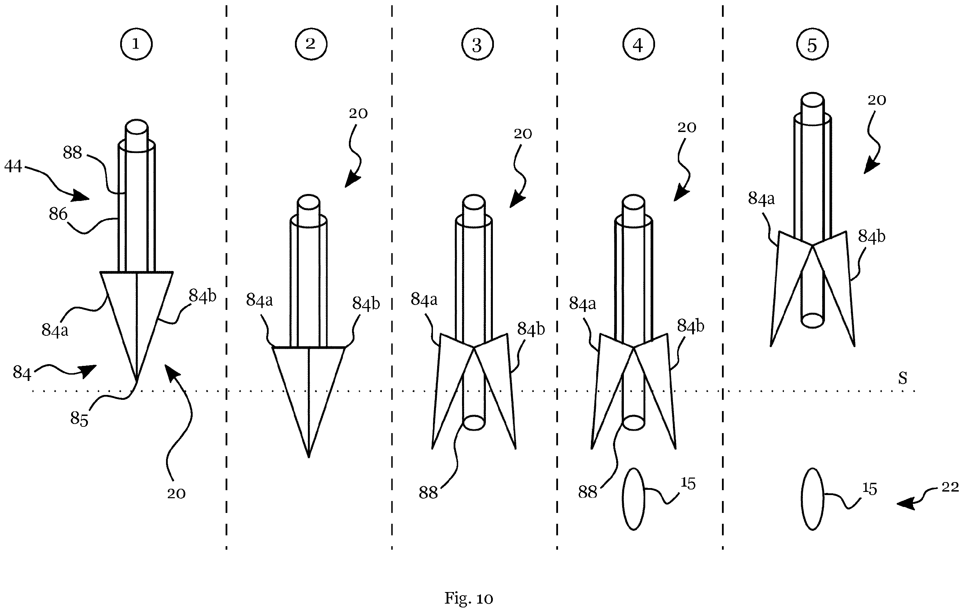

Fig. 10 illustrates a subsurface injector 20 compatible with subsurface farm fertilizer deployment independently of a tilling of soil according to an example, wherein the operation of the subsurface injector 20 a is illustrated with steps 1 to 5 of a subsurface injection sequence.

The subsurface injector 20 comprises a puncturing head 84 depicted as a substantially conic and segmented puncturing device having a tip 85 oriented towards the soil surface S and configured to pierce the soil surface S. The puncturing head 84 is coupled to a guiding section 44 comprising an outer protective layer 86 and a guiding tube 88 coupled to the puncturing head 84 and arranged inside of the protecting layer 86 for guiding fertilizer pouches 14 into the deposition region 22. The subsurface injector 20 is then configured to be vertically displaced to pierce the soil surface S and to introduce a dispensed fertilizer pouch 15 into the deposition region 22, such as by performing the subsurface injection sequence illustrated by the steps 1 to 5.

In the first step, the subsurface injector 20 is arranged above the soil surface S and moved to a desired deposition location. In the second step, the subsurface injector 20 pierces the soil surface S with the puncturing head 84 to move the puncturing head 84 towards the deposition region 22. In the third step, the segments 84a and 84b of the puncturing head 84 are laterally displaced, thereby exposing a bottom side of the guiding tube 88 to the deposition region 22. In the fourth step, a dispensed fertilizer pouch 15 is introduced into the deposition region 22 via said bottom side of the guiding tube 88. In the fifth step, the subsurface injector 20 is retracted from the soil above the soil surface S.

As in the previous examples, the subsurface injector 20 may be equipped with an unsealing unit 30 to at least partially unseal the dispensed fertilizer pouch 15 at or close to the deposition region 22. In some examples, an unsealing unit 30 is integrated with the puncturing head 84 and is configured to unseal the dispensed fertilizer pouch 15 during exposing of the guiding tube 88, such as by arranging puncturing or cutting devices in at least one of the segments 84a, 84b configured to engage the dispensed fertilizer pouch 15 during a lateral displacement of the segments 84a, 84b of the puncturing head 84.

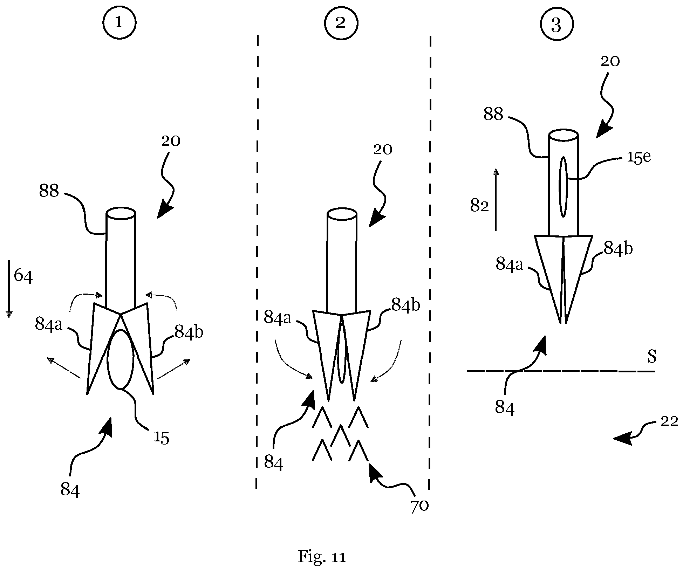

Fig. 11 illustrates a subsurface injector 20 related to the example of Fig. 10 according to another example. The subsurface injector 20 comprises a segmented puncturing head 84 comprising segments 84a and 84b configured to pierce the soil and to introduce a dispensed fertilizer pouch 15 introduced along the injection direction 64 via the guiding tube 88 into the deposition region 22. The illustrated steps 1 to 3 can replace steps 4 and 5 of the subsurface injection sequence of Fig. 10 and illustrate the deposition of farm fertilizer into the deposition region 22 and the subsequent retrieval of the empty fertilizer pouch 15e.

In the first step, the puncturing head 84 is opened by laterally displacing the segments 84a and 84b after the puncturing head 84 pierces the soil surface S and is located close to the deposition region 22 (lateral motion of segments illustrated with black arrows). In the second step, the segments 84a, 84b are operated according to a closing motion of the puncturing head 84 to engage the dispensed fertilizer pouch 15, thereby at least partially unsealing and/or squeezing the dispensed fertilizer pouch 15 to give off farm fertilizer into a pocket of farm fertilizer 70 in the deposition region 22. In the third step, the empty fertilizer pouch 15e is recovered, such as by a pneumatic suction device aspiring air from the guiding tube 88 of the subsurface injector 20, thereby retrieving the empty fertilizer pouch 15e from the subsurface injector 20 towards a recovery bin 72 (not shown). Subsequently, the subsurface injector 20 can be retracted from the soil above the soil surface S to advance the subsurface injector 20 to a subsequent farm fertilizer deposition location.

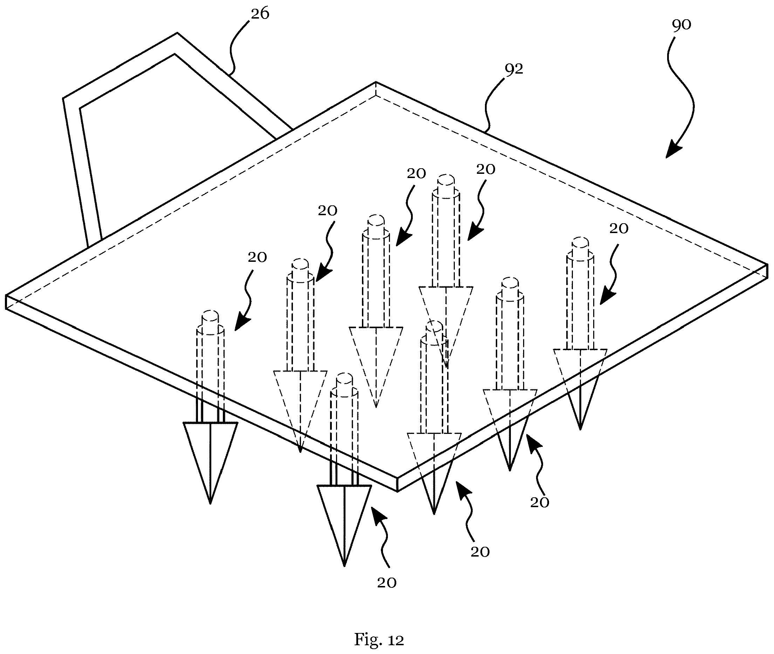

Fig. 12 illustrates a parallel injection device 90 for parallel operation of subsurface injectors with puncturing heads 84 for piercing the soil surface S according to an example. The illustrated parallel injection device 90 comprises a coupling member 92 provided with a plurality of subsurface injectors 20 as depicted in Figs. 10 and 11. The parallel injection device 90 may be towed via a drawbar 26 behind an agricultural implement and each of the subsurface injectors 20 may be coupled to a corresponding pouch dispenser 18 to dispense fertilizer pouches 14 retrieved from a hold 12 (not shown). In addition, the device 90 may also be arranged in front of an agricultural implement. By synchronously operating the subsurface injectors 20 to pierce the soil surface S and to introduce dispensed fertilizer pouches 15 into the deposition region 22, parallel injection of fertilizer pouches 14 can be achieved according to an operational width given substantially by the width of the coupling member 92.

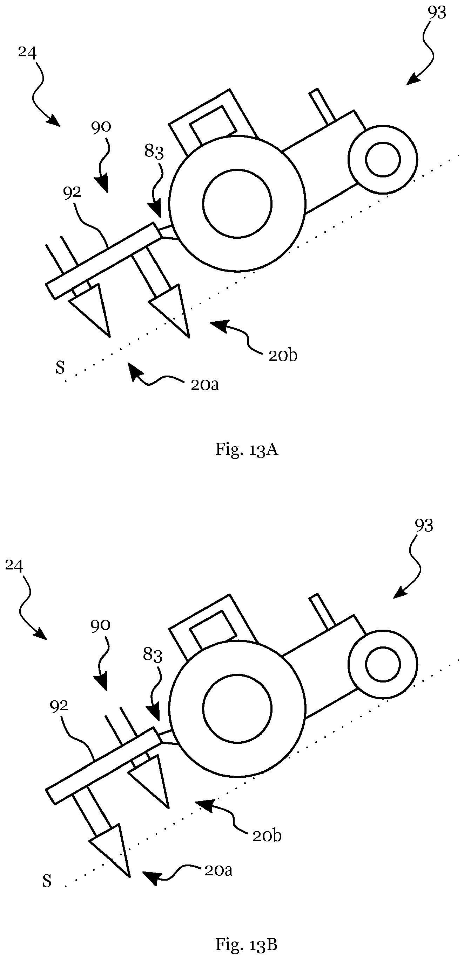

Figs. 13A, 13B illustrate an agricultural implement 24 with a device 90 as shown in Fig. 12 in two stages of a process of deploying farm fertilizer and concurrent anchoring of the agricultural implement 24 in a hillside location according to an example. As schematically illustrated, the subsurface injectors 20 can be configured to pierce the soil surface S alternatingly to anchor the device 90 in turns. In Fig. 13A, a first row of subsurface injectors 20b pierces the soil surface S to thereby anchor an agricultural implement 24, such as tractor 93, with respect to a slope defined by the soil surface S. In a subsequent step illustrated in Fig. 13B, a second row of subsurface injectors 20a may be driven to pierce the soil surface S and to lie beneath the soil surface S to anchor said tractor 93 in a different position.

The subsurface injectors 20a, b may be controllably displaceable along the towing direction T to allow a constant movement of the agricultural implement 24 and/or to provide continuous anchoring of the device 90 during deployment of farm fertilizer. As illustrated, the subsurface injectors 20 may be divided into sets of subsurface injectors 20a, 20b which can be offset from each other and which may perform an alternating back and forth movement with respect to the device 90. Thus, the sets of subsurface injectors 20a, 20b may switch between anchoring the device 90 and advancing along the towing direction T in turns in a controlled manner. Thus, by operating the subsurface injectors 20a, 20b the device 90 may provide anchoring to assist deployment of farm fertilizer in hillside locations.

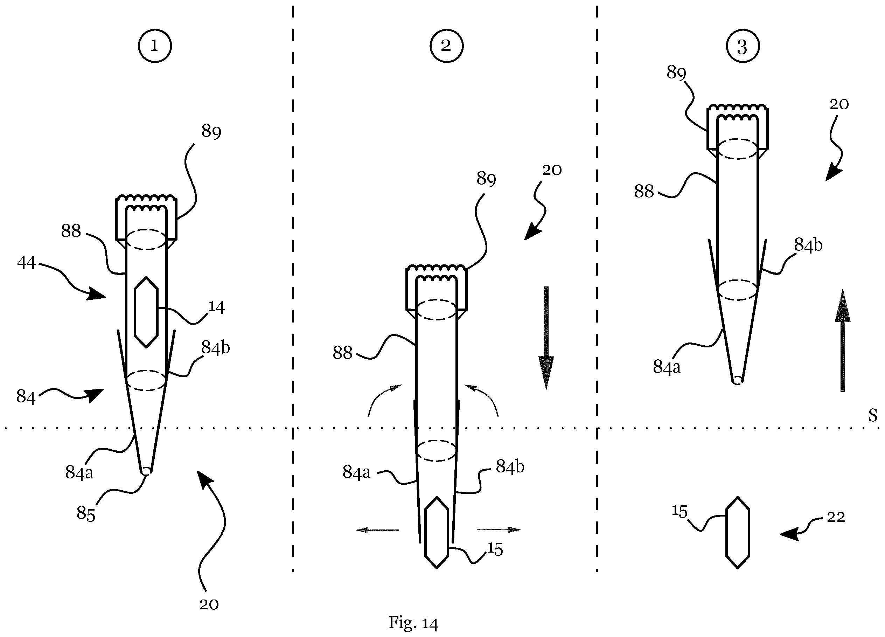

Fig. 14 illustrates another embodiment of a system 10 for deploying prepackaged farm fertilizer according to an example, wherein the system 10 is a portable farm fertilizer deployment system 10 manually operable to introduce said farm fertilizer into a deposition region 22, wherein steps 1 to 3 illustrate an exemplary subsurface injection sequence. To operate the system 10, fertilizer pouches 14 can be initially loaded into a holding portion of the guiding section 44, the system 10 can then be operated with a handle 89 to pierce the soil surface S with the subsurface injector 20, and the fertilizer pouch 14 may be retrieved from the holding portion and dispensed, such as by operating a switch or a crank (not depicted) integrated with the system 10 at or close to the handle 89, to introduce the fertilizer pouch 14 into the deposition region 22 in a controllable manner.

As in previously described examples, the subsurface injector 20 of the system 10 can comprise a puncturing head 84 depicted as a substantially conic and segmented puncturing device having a tip 85 oriented towards the soil surface S and configured to pierce the soil surface S. A guiding section 44 comprises a guiding tube 88 coupled to the puncturing head 84 for guiding fertilizer pouches 14 into the deposition region 22. The subsurface injector 20 is then configured to be vertically displaced via the handle 89 to pierce the soil surface S and to introduce a dispensed fertilizer pouch 15 into the deposition region 22, such as via the illustrated sequence of steps 1 to 3.

In the first step, the puncturing head 84 pierces the soil surface S with the tip 85 to move the puncturing head 84 towards the deposition region 22. In the second step, the segments 84a and 84b of the puncturing head 84 are laterally displaced, thereby exposing a bottom side of the guiding tube 88 to the deposition region 22, such that a dispensed fertilizer pouch 15 may be introduced into the deposition region 22 via said bottom side of the guiding tube 88. Said lateral displacement may be manually operable with a corresponding displacement mechanism and/or may be at least partially mediated by a shape and/or a mounting of the segments 84a, 84b of the puncturing head 84, said shape and/or mounting mechanically coupling the introduction of the subsurface injectors 20 beneath the soil surface S and the lateral displacement of the segments 84a, 84b. In the third step, the subsurface injector 20 is retracted from the soil above the soil surface S, while the dispensed fertilizer pouch 15 remains in the deposition region 22.

As in the previous examples, the subsurface injector 20 may be equipped with an unsealing unit 30 to at least partially unseal the dispensed fertilizer pouch 15 at or close to the deposition region 22. In some examples, an unsealing unit 30 is integrated with the puncturing head 84 and is configured to unseal the dispensed fertilizer pouch 15 during exposing of the guiding tube 88, such as by arranging puncturing or cutting devices in at least one of the segments 84a, 84b configured to engage the dispensed fertilizer pouch 15 during a lateral displacement of the segments 84a, 84b of the puncturing head 84.

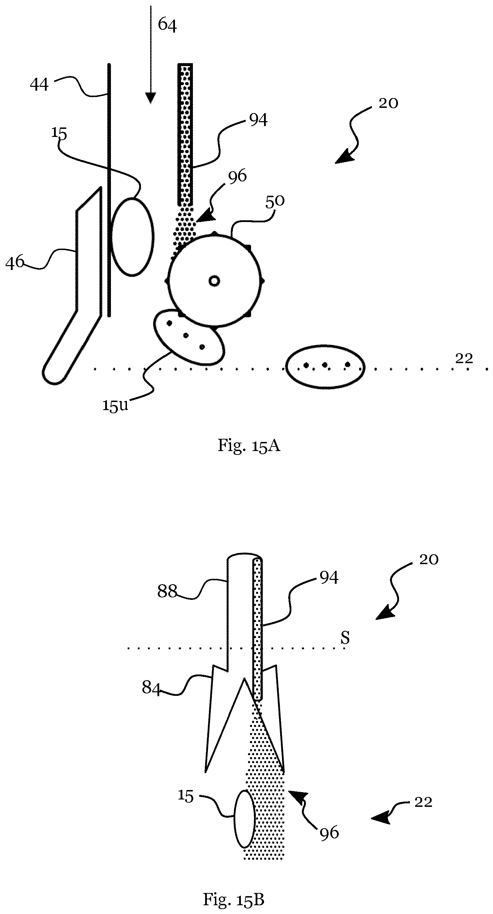

Fig. 15A illustrates another example of a subsurface injector 20 comprising a guiding section 44 arranged behind a shank 46 to be operable as a tilling element. Dispensed fertilizer pouches 15 are introduced along the injection direction 64 into the deposition region 22 and are engaged by a roller 50 to at least partially unseal and/or guide the dispensed fertilizer pouches 15 into the deposition region 22. In addition, the subsurface injector 20 comprises an additive conduit 94 configured to dispense additives 96, such as reagents, into the deposition region 22.

The additives 96 dispensed by the conduit 94 may be additional fertilizer components, such as plant nutrients, and/or may comprise reagents to react with the enclosing material of the fertilizer pouches 14 and/or the farm fertilizer enclosed in the fertilizer pouches 14. Thus, said reagents may assist composting and/or unsealing of the enclosing material of the fertilizer pouches 14 and/or may react with the farm fertilizer introduced into the deposition region 22 to improve plant growth.

In the illustrated example, the additive conduit 94 is equipped with an outlet close to the roller 50, such that the additives 96 are brought in contact with the dispensed fertilizer pouch 15 during the revolving motion R of the roller 50. However, the skilled person will appreciate that the additives 96 may also be injected directly into the deposition region 22 or dispensed onto the dispensed fertilizer pouches 15 at or above the soil surface S. Moreover, the conduit 94 may also comprise a valve to selectively dispense additives 96 into the deposition region 22 synchronously with the dispensing of fertilizer pouches 14.

Fig. 15B illustrates another example of a subsurface injector 20 comprising a puncturing head 84 to pierce the soil surface S and to introduce a dispensed fertilizer pouch 15 into the deposition region 22 similar to the examples illustrated in Figs. 10 to 14. A conduit 94 is integrated with the guiding tube 88 for introducing the dispensed fertilizer pouches 15 into the deposition region 22. The conduit 94 injects additives 96 into the deposition region 22 when the puncturing head 84 is operated to release a dispensed fertilizer pouch 15 into the deposition region 22. A valve may be operated to perform said injection of additives 96 into the deposition region 22 synchronously with the introduction of the dispensed fertilizer pouch 15 into the deposition region 22.

In some embodiments, additives 96 can also be integrated in an outer material layer of the fertilizer pouch 15. The farm fertilizer enclosed in the fertilizer pouch 15 may then react with the additives 96 in the outer material layer of the fertilizer pouch 15 following at least partial unsealing of the fertilizer pouch 15 by the unsealing unit 30 or at least partial composting of the fertilizer pouch 15. In some embodiments, an outer material layer of fertilizer pouch 15 encloses both the additives 96 and an inner material layer enclosing the farm fertilizer, and the unsealing unit 30 is configured to unseal both the outer and the inner material layer synchronously or sequentially to give off additives 96 and the farm fertilizer into the deposition region 22.

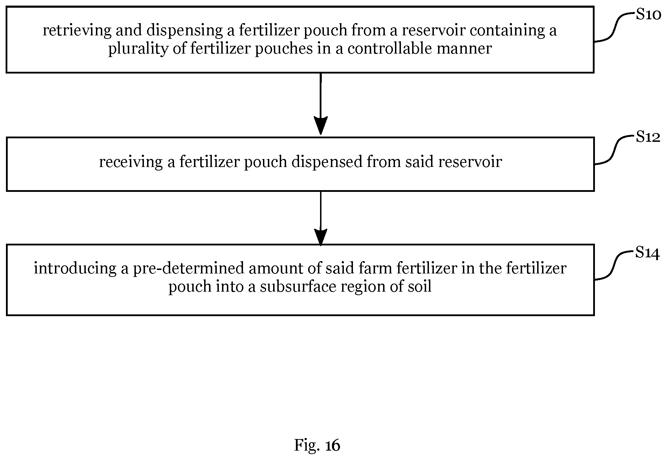

Fig. 16 schematically illustrates a method for deploying farm fertilizer enclosed in fertilizer pouches 14 with an agricultural implement 24, in particular using a system 10 as previously described, said fertilizer pouches 14 each enclosing a pre-determined amount of said farm fertilizer. The method comprises the step of retrieving and dispensing a fertilizer pouch 14 from a reservoir 12 containing a plurality of fertilizer pouches 14 in a controllable manner (step S10). The method further comprises the steps of receiving a fertilizer pouch 15 dispensed from said reservoir 12 (step S12), and introducing a pre-determined amount of said farm fertilizer in the fertilizer pouch 15 into a subsurface region of soil 22 (step S14).

In accordance with the preceding description of systems 10 for deploying farm fertilizer, the method may comprise further steps for implementing the functionality of or using any one of the examples of fertilizer deploying systems 10 and agricultural implements 24 or components thereof for deploying farm fertilizer enclosed in fertilizer pouches 14.

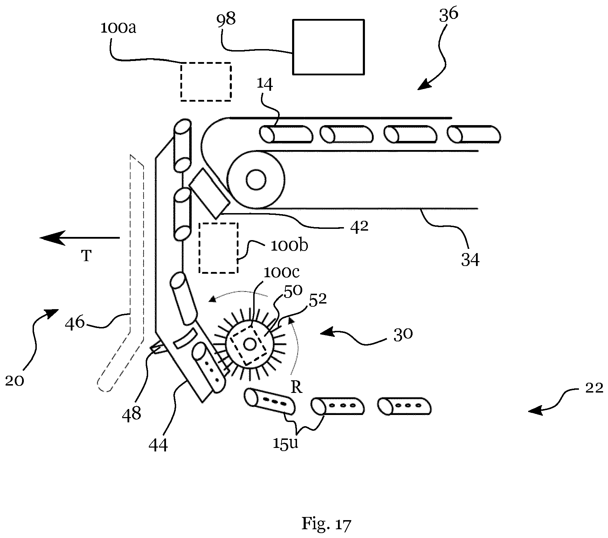

Fig. 17 illustrates a detail view of an example of a system 10 for deploying farm fertilizer similar to the system 10 illustrated in Fig. 3A, further illustrating a scanning sensor 98 and one or more presence sensors 100a-c to track fertilizer pouches 14.

As illustrated in Fig. 17, the scanning sensor 98 may be arranged in the receiving and dispensing section 36 of the system 10, such as close to a receiving section 36 arranged at the hold 12 or close to a dispensing section 36 close to the one or more subsurface injectors 20. The scanning sensor 98 may be used to scan an identifier imprinted on the fertilizer pouches 14, such as a print and/or an impression and/or a cutout and/or a molding in the enclosing material of the fertilizer pouches 14. Preferably, the identifier features an optically discernable code and the scanning sensor 98 is arranged and configured to scan the optically discernable code by an optical measurement of the enclosing material of the fertilizer pouches 14. For example, the scanning sensor 98 may comprise a camera and/or an optical scanning system based on LED- or laser-light to detect the optically discernable code by a contactless measurement of the optical properties of the enclosing material.

Additionally or alternatively, the scanning sensor 98 may be arranged in the one or more subsurface injectors 20, such as along a guiding section 44 of the one or more subsurface injectors 20 and/or at a hopper 62 associated with the one or more subsurface injectors 20 (not shown). However, the scanning sensor 98 should be arranged above the soil surface S to avoid staining of the scanning sensor 98 and to ensure continuous scanning of the identifier of fertilizer pouches 14 during deploying the farm fertilizer.

The identifier may be associated with a fertilizer property of the fertilizer pouch 14, such as an origin and/or a characteristic of the content of the fertilizer pouch 14, and the system 10 may be adapted to store the scanned identifier for documentation. For example, the system 10 may comprise a controller and a memory (not shown), and the controller may be configured to receive the identifier from the scanning sensor 98 and store the identifier along with contextual data, such as the position and/or speed and/or deploying frequency of the system 10. The system 10 may also adapt a deployment modality for deploying farm fertilizer based on the scanned identifier and the contextual data. For example, a deployment frequency of the system 10, such as the rotation frequency of the roller 50 or a speed of the conveyor 34, may be adapted based on the content of the fertilizer pouch 14 as determined from the identifier. Preferably, the deployment modality is based on the fertilizer property of the fertilizer pouch 14 and the present location or velocity of the subsurface injectors 20, e.g. as determined from GPS data, such as to obtain a predetermined deployment density of plant nutrients.

The system 10 may further comprise one or more presence sensors 100a-c (illustrated in Fig. 17 at different potential locations with dashed lines). The one or more presence sensors 100a-c are adapted to detect a presence of a fertilizer pouch 14 in its vicinity, such as to track an advance of the fertilizer pouches 14 through the receiving and dispensing section 36 and/or the subsurface injectors 20. For example, the one or more presence sensors 100a-c may comprise optical sensors, such as cameras, diodes, photocells, CCD sensor elements, and the like, and may comprise corresponding light sources (e.g. LEDs, Lasers, etc.), and/or may comprise mechanical sensors, such as mechanically activated switches, scales, pressure plates, and the like, and/or electrical sensors, such as capacitive sensors, RF-sensors, RF-tag reading sensors and the like, to detect a presence of a fertilizer pouch 14 in the vicinity of the one or more presence sensors 100a-c. The one or more presence sensors 100a-c may be arranged in the receiving and dispensing section 36, as illustrated for the presence sensor 100a, or maybe arranged in the subsurface injectors 20, such as along the guiding section 44 (as illustrated for presence sensor 100b) or at the roller 50 (as illustrated for presence sensor 100c). As the one or more presence sensors 100a-c may not need to perform optical scanning of the identifier, the one or more presence sensors 1ooa-c may also be arranged below the soil surface 100a-c. The system 10 may also comprise a plurality of presence sensors 100a-c arranged before and/or after the scanning sensor 98. For example, a first presence sensor 100a-c may be arranged in the receiving and dispensing section 36 closer to the hold 12 than the scanning sensor 98, and a second presence sensor 100a-c may be arranged past the scanning sensor 98, such as at or close to the one or more subsurface injectors 20, to track the fertilizer pouches 14 in the system 10 before and after passing the scanning sensor 98.

It is noted that the example of Fig. 17 illustrates a system 10 for deploying separated fertilizer pouches 14. However, the skilled person will appreciate that a scanning sensor 98 and/or the one or more presence sensors 100a-c may equally be employed with strings 74 of fertilizer pouches 14 to scan an identifier imprinted on fertilizer pouches 14 or imprinted in a separating segment 75 between concatenated fertilizer pouches 14, and/or to detect a presence of a fertilizer pouch 14 at the position of the one or more presence sensors 100a-c.

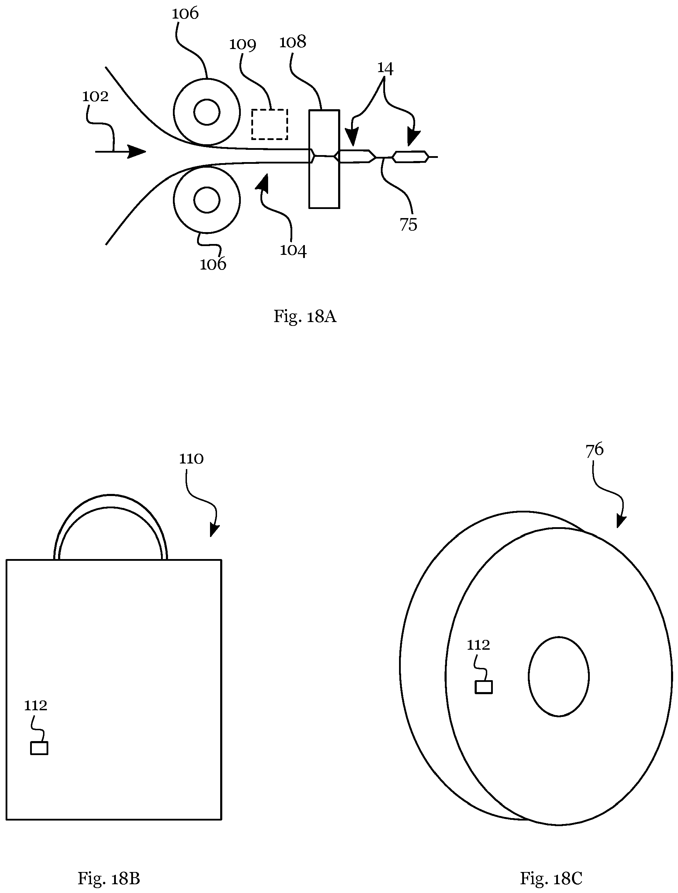

Fig. 18A illustrates an example of a filling system for fertilizer pouches 14. The filling system comprises an injection element 102 for injecting liquid farm fertilizer into sections of enclosing material 104. The enclosing material 104 may be guided by rollers 106 to a separating element 108, wherein the separating element 108 is configured to close opposing sides of the enclosing material 104 to form fertilizer pouches 14 enclosing a predetermined amount of farm fertilizer separated by closed separating segments 75. The filling system may comprise an imprinting element to imprint an identifier onto the enclosing material 104. For example, the separating element 108 may imprint an identifier on the separating segments 75, such as by embossing the enclosing material 104 or by printing the identifier on the enclosing material 104. Said identifier may be associated with a certain property characterizing the farm fertilizer, such as the biological origin of farm fertilizer, e.g. whether the farm fertilizer includes feces which may originate from pigs, cows, sheep or other animals, or whether the farm fertilizer includes other manure sources, such as compost.

In some examples, the filling system comprises a detection element 109 to detect a fertilizer property of the farm fertilizer enclosed by the enclosing material 104 as a measured fertilizer property, such as a water content or a nutrition value of the farm fertilizer enclosed in the fertilizer pouch 14.

The fertilizer property may be recorded with the identifier imprinted on the enclosing material 104 for documentation. As farm fertilizer is usually a biological product and may therefore be subject to large variation in view of ambient variables, such as a degree of outgassing, UV exposure and biological origin, recording the measured fertilizer property of farm fertilizer enclosed in the fertilizer pouches 14 with an identifier of a fertilizer pouch 14 or an identifier of a plurality of fertilizer pouches 14 may facilitate accurate documentation of packaged and/or deployed farm fertilizer. In some embodiments, the identifier includes the fertilizer property, such as a code representing a certain measured fertilizer property or the origin of the farm fertilizer enclosed in the fertilizer pouch 14. The identifier may be arranged on the front and tail sections of each fertilizer pouch 14, such as at the edges of the separating segments 75, to allow reading of the identifier on both sides of the fertilizer pouch 14.

A plurality of fertilizer pouches 14 may be packaged together along with a batch identifier 112 characterizing a plurality of fertilizer pouches 14 as shown in the examples of Figs. 18B, 18C.

In Fig. 18B, a plurality of fertilizer pouches 14 (not shown) are packaged in a big pack 110 as a batch of fertilizer pouches 14, wherein the big pack 110 comprises a batch identifier 112. Said batch identifier 112 may feature a readable code, such as an optically readable code, e.g. a barcode, or a radio frequency readable code, such as an RFID tag. The batch identifier 112 may be associated with common properties of the plurality of fertilizer pouches 14. As an example, the batch identifier 112 may include information on a characteristic of the enclosing material 104, such as a composition or thickness of the enclosing material 104, or a packaging date, such as to document an expected expiry date of the plurality of fertilizer pouches 14. However, the skilled person will appreciate that this information may also be included in an identifier associated with a single fertilizer pouch 14.

Moreover, the batch identifier 112 may also contain information regarding the total content of the plurality of fertilizer pouches 14, such as the quantity of fertilizer pouches 14 stored in the big pack 110 and/or a total plant nutrient value and/or total water content of the plurality of fertilizer pouches 14.

As illustrated in Fig 18C, a drum 76 for holding a string 74 of fertilizer pouches 14 (not shown) may equally comprise a batch identifier 112 which may also feature a readable code. As a further example, the batch identifier 112 may contain information on the number and/or size and/or separation distance of fertilizer pouches 14 of the string 74 arranged on the drum 76.

Said batch identifier 112 may be read by a scanning member (not shown) of the system 10 for documentation of deployed farm fertilizer. For example, a user may scan an optically scannable code with a scanning device and transmit information pertaining to the scanned batch identifier 112 to the controller of the system 10. Alternatively or additionally, the system 10 may comprise a scanning member, such as an optical scanning member or an RF-scanning member, to scan the batch identifier 112 of a big pack 110 or a drum 76 in the hold 12, and the system 10 may automatically detect properties of the plurality of fertilizer pouches 14 stored in the big pack 110 or arranged on the drum 76.

The description of the preferred embodiments and the figures merely serve to illustrate the invention and the beneficial effects associated therewith, but should not be understood to imply any limitation. The scope of the invention is to be determined solely by the appended claims.

### LIST OF REFERENCE SIGNS

- 10: system
- 12: hold
- 12t: supporting tires
- 12a: upper portion of hold
- 12b: lower portion of hold
- 14: fertilizer pouch
- 15: dispensed fertilizer pouch
- 15i: injected fertilizer pouch
- 15u: at least partially unsealed fertilizer pouch
- 15e: empty fertilizer pouch
- 15s: separated fertilizer pouches
- \16: retrieval and dispensing section
- 18: pouch dispenser
- 20: subsurface injector
- 22: subsurface deposition region of soil/deposition region
- 24: agricultural implement
- 26: drawbar
- 28: grubber
- 30: unsealing unit
- 31: separating grid
- 32: separating elements
- 34: conveyor
- 36: dispensing section
- 38: pneumatic suction device
- 40: pneumatic discharge jet
- 42: baffle
- 44: guiding section
- 46: shank
- 48: adjustable blade
- 50: roller
- 52: puncturing protrusion
- 54: permeable portion
- 56: guiding bar of permeable portion
- 58: controllable dispensing mechanism
- 60: rotatable retaining element
- 62: hopper
- 64: injection direction
- 66: conveyor
- 68: narrow section
- 70: fertilizer pocket
- 72: recovery bin
- 74: string of fertilizer pouches
- 75: separating segments
- 76: drum
- 76a-c: drum segments
- 78: separating blade
- 80: retrieval direction
- 82: recovery drum
- 83: hinge
- 84: puncturing head
- 84a, b: puncturing head segments
- 86: outer protective layer
- 88: guiding tube
- 89: handle
- 90: parallel injection device
- 92: coupling member
- 93: tractor
- 94: additive conduit
- 96: additives
- 98: scanning sensor
- 100a-c: presence sensor
- 102: injection element
- 104: enclosing material
- 106: roller
- 108: separating element
- 110: big pack
- 112: batch identifier
- S: soil surface
- T: towing direction
- O: ondulating motion

## Claims

1. An agricultural fertilizer deploying system (10) configured for deploying at least partially liquid farm fertilizer, in particular an agricultural implement (24), said system (10) comprising:
- a hold (12) configured to retain a plurality of fertilizer pouches (14), said fertilizer pouches (14) each enclosing a pre-determined amount of said at least partially liquid farm fertilizer;
- a retrieval and dispensing section (16) coupled to said hold (12), said retrieval and dispensing section (16) being configured to retrieve said fertilizer pouches (14) from the hold (12) and to dispense a retrieved fertilizer pouch (15) in a controllable manner;
- a cultivator, and
- one or more subsurface injectors (20) each coupled to said retrieval and dispensing section (16), said subsurface injectors (20) being configured to receive the dispensed fertilizer pouch (15) from said retrieval and dispensing section (16) and to introduce the pre-determined amount of said farm fertilizer into a subsurface deposition region of soil (22) more than 5 cm below the soil surface;
wherein each subsurface injector (20) comprises a tube (44) arranged behind a tilling element (28, 46) of the cultivator;
wherein each tube (44) is configured to receive the dispensed fertilizer pouch (15) and guide the dispensed fertilizer pouch (15) to said subsurface deposition region of soil (22).

2. The system (10) of claim 1, wherein said tilling element (28, 46) is a shank (46) or grubber (28); and/or
wherein the tube (44) comprises a permeable section (54) at least in a portion of the tube (44) arranged below ground level, the permeable section (54) being liquid permeable at least in a trailing direction with respect to a tilling direction (T) of the cultivator, said permeable section (54) in particular comprising spaced bars (56) or wire netting.

3. The system (10) of claim 1 or 2, wherein the system comprises at least one unsealing unit (30) arranged at or close to the one or more subsurface injectors (20), said unsealing unit (30) being configured to at least partially unseal the dispensed fertilizer pouch (15), allowing said fertilizer pouch (14) to give off said farm fertilizer into the subsurface deposition region of soil (22),
wherein the unsealing unit (30) is in particular configured to unseal said dispensed fertilizer pouch (15) close to or below ground-level after said dispensed fertilizer pouch (15) has been dispensed from said retrieval and dispensing section (16),
wherein each unsealing unit (30) preferably comprises a roller (50) configured to unseal the dispensed fertilizer pouch (15) using a protrusion (52) and/or blade (48) arranged on and/or opposite to the roller (50) by one or more of puncturing, cutting, ripping and breaking the dispensed fertilizer pouch (15) during a revolving motion (R) of the roller (50), wherein said revolving motion (R) causes and/or assists an engagement of said blade (48) and/or protrusion (52) with the dispensed fertilizer pouch (15), said roller (50) being preferably arranged in a portion of the one or more subsurface injectors (20) lying at or below the surface (S) of the soil tilled by the cultivator;
wherein the system (10) most preferably comprises a conveyor (34) coupled to the roller (50) to assist introduction of the dispensed fertilizer pouch (15) into the subsurface deposition region of soil (22).

4. The system (10) of claim 3, wherein the fertilizer pouches (14) comprise an enclosing material to enclose said farm fertilizer, wherein the unsealing unit (30) is configured to empty the dispensed fertilizer pouch (15), and wherein the system (10) further comprises a recovery unit configured to prevent deposition of the enclosing material of the dispensed fertilizer pouch (15) in the soil and to recover empty fertilizer pouches (15e), preferably in a recovery bin (72, 82) or onto a drum,
wherein the system in particular further comprises a plurality of at least liquid permeable retainers (54, 68), in particular wire netting, said retainers (54, 68) being arranged close to a bottom side of each subsurface injector (20) to prevent the enclosing material of the dispensed fertilizer pouch (15) to remain in the soil, while the dispensed fertilizer pouch (15) is emptied in the subsurface deposition region of soil (22); and/or
wherein the recovery unit in particular comprises at least one of a pneumatic device and a conveyor (66) integrated with the subsurface injector (20) to recover empty fertilizer pouches (15e) from the one or more subsurface injectors (20).

5. An agricultural fertilizer deploying system (10) configured for deploying at least partially liquid farm fertilizer, in particular an agricultural implement (24), said system (10) comprising:
- a hold (12) configured to retain a plurality of fertilizer pouches (14), said fertilizer pouches (14) each enclosing a pre-determined amount of said at least partially liquid farm fertilizer;
- a retrieval and dispensing section (16) coupled to said hold (12), said retrieval and dispensing section (16) being configured to retrieve said fertilizer pouches (14) from the hold (12) and to dispense a retrieved fertilizer pouch (15) in a controllable manner; and
- one or more subsurface injectors (20) each coupled to said retrieval and dispensing section (16), said subsurface injectors (20) being configured to receive the dispensed fertilizer pouch (15) from said retrieval and dispensing section (16) and to introduce the pre-determined amount of said farm fertilizer into a subsurface deposition region of soil (22) more than 5 cm below the soil surface;
wherein said subsurface injectors (20) each comprise a puncturing head (84), wherein the system (10) is configured to introduce the dispensed fertilizer pouch (15) into the subsurface deposition region of soil (22) during a vertical subsurface injection sequence of said subsurface injectors (20), said subsurface injectors (20) being configured to:
- penetrate the soil surface (S) with the puncturing head (84) of the subsurface injector (20);
- release the dispensed fertilizer pouch (15) into the subsurface deposition region of soil (22);
- retract the puncturing head (84) above the soil surface (S).

6. The system (10) of claim 5, wherein the puncturing head (84) is operable to displace soil in the subsurface deposition region of soil (22).

7. The system (10) of claim 5 or 6, wherein an unsealing unit (30) is configured to at least partially unseal the dispensed fertilizer pouch (15) synchronously with the vertical subsurface injection sequence of the subsurface injectors (20) allowing said fertilizer pouch (14) to give off said farm fertilizer into the subsurface deposition region of soil (22), wherein the unsealing unit (30) in particular comprises unsealing members at or close to said puncturing head (84) of each subsurface injector (20).

8. The system (10) of any one of the preceding claims, said system (10) being configured for deploying at least partially organic fertilizer, in particular comprising manure and/or fermentation substrate.

9. The system (10) of any one of the preceding claims, further comprising a conveyor (34) to guide the plurality of fertilizer pouches (14) from the hold (12) to said retrieval and dispensing section (16); and/or
wherein said retrieval and dispensing section (16) comprises one or more controllable dispensing mechanisms (58) configured to selectively dispense a fertilizer pouch (14) retrieved by said retrieval and dispensing section (16), said one or more controllable dispensing mechanisms (58) in particular comprising at least one of a pneumatic suction device (38), a pneumatic discharge jet (40) and a hatch (60).

10. The system (10) of any one of the preceding claims, wherein the one or more subsurface injectors (20) are configured to introduce the dispensed fertilizer pouch (15) into the subsurface deposition region of soil (22), wherein said subsurface deposition region of soil (22) is in particular located in a range of 5 cm to 35 cm, preferably of 10 cm to 30 cm, below the soil surface (S); and wherein the system (10) in particular further comprises a position recording unit to record the position of the dispensed fertilizer pouch (15) introduced into the subsurface deposition region of soil (22); and/or wherein said retrieval and dispensing section (16) is configured to controllably dispense the retrieved fertilizer pouch (15) based on a position of the subsurface injectors (20), in particular based on a traveled distance of an associated subsurface injector (20) since the last selective dispensing of a fertilizer pouch (14);and/or further comprising a position determining unit, wherein said retrieval and dispensing section (16) is configured to trigger dispensing the fertilizer pouch (15) into the subsurface deposition region of soil (22) based on a current position determined by the position determining unit, wherein said current position is the current position of one of the one or more subsurface injectors (20) or the position of a component arranged in a known, in particular fixed, spatial relation to said one or more subsurface injectors (20).

11. The system (10) of any one of the preceding claims, further comprising an additive dispenser (94) for dispensing additives (96) and/or reagents (96) into the subsurface deposition region, in particular together with the dispensed fertilizer pouch (15), preferably an additive conduit (94) integrated with each of the one or more subsurface injectors (20), to dispense additives (96) and/or reagents (96) into the subsurface deposition region of soil (22).

12. The system (10) of any one of the preceding claims, further comprising a separating grid (31) to separate the plurality of fertilizer pouches (14) from the hold (12) into sequentially laid out fertilizer pouches (14), wherein said separating grid (31) is preferably configured to orient said fertilizer pouches (14) and is most preferably driven with an ondulating motion to assist separation of said fertilizer pouches (14) into sequentially laid out fertilizer pouches (14); and/or
wherein the system (10) further comprises a drum (76, 76a-e) to hold (12) a string (74) of mechanically connected fertilizer pouches (14) rolled up on said drum (76, 76a-e); wherein the system (10) in particular further comprises a separation unit (68) to separate individual fertilizer pouches (14) from said string (74) of connected fertilizer pouches (14), and/or wherein the system (10) further comprises a recovery drum (82) to recover the string (74) of connected fertilizer pouches (14) after said farm fertilizer is given off into said subsurface deposition region of soil (22).

13. A method for deploying farm fertilizer enclosed in fertilizer pouches (14) with an agricultural implement (24), using a system (10) according to any one of the preceding claims, said fertilizer pouches (14) each enclosing a pre-determined amount of said farm fertilizer, said method comprising:
- retrieving and dispensing a fertilizer pouch (14) from a reservoir (12) containing a plurality of fertilizer pouches (14) in a controllable manner;
- receiving a fertilizer pouch (15) dispensed from said reservoir (12) and
- introducing the pre-determined amount of said farm fertilizer into a subsurface region of soil (22).

14. The method of claim 13 further comprising:
- introducing said dispensed fertilizer pouch (15) into the subsurface deposition region of soil (22); and/or
- at least partially unsealing said dispensed fertilizer pouch (15) allowing said fertilizer pouch (15) to give off farm fertilizer into the subsurface deposition region of soil (22).

15. The method of claim 13 or 14, further comprising the steps of:
- penetrating a soil surface (S) with a puncturing head (84) and advancing said puncturing head (84) into said subsurface deposition region of soil (22);
- releasing said dispensed fertilizer pouch (15) into said subsurface deposition region of soil (22);
- retracting said puncturing head (84) above the soil surface (S) after releasing said dispensed fertilizer pouch (15).

## Patentansprüche

1. Landwirtschaftliches Düngemittelausbringungssystem (10), das zum Ausbringen von zumindest teilweise flüssigem landwirtschaftlichem Düngemittel eingerichtet ist, insbesondere einem landwirtschaftlichen Arbeitsgerät (24), wobei das System (10) umfasst:
- einen Laderaum (12), der eingerichtet ist, mehrere Düngemittelbeutel (14) zu halten, wobei die Düngemittelbeutel (14) jeweils eine vorbestimmte Menge des zumindest teilweise flüssigen landwirtschaftlichen Düngemittels einschließen;
- einen Entnahme- und Abgabeabschnitt (16), der mit dem Laderaum (12) gekoppelt ist, wobei der Entnahme- und Abgabeabschnitt (16) eingerichtet ist, die Düngemittelbeutel (14) aus dem Laderaum (12) zu entnehmen und einen entnommenen Düngemittelbeutel (15) in einer steuerbaren Weise abzugeben;
- einen Kultivator, und
- einen oder mehrere unterirdische Injektoren (20), die jeweils mit dem Entnahme- und Abgabeabschnitt (16) gekoppelt sind, wobei die unterirdischen Injektoren (20) eingerichtet sind, den abgegebenen Düngemittelbeutel (15) aus dem Entnahme- und Abgabeabschnitt (16) aufzunehmen und die vorbestimmte Menge des landwirtschaftlichen Düngemittels in einen unterirdischen Abgabeerdbereich (22) mehr als 5 cm unter der Erdoberfläche einzubringen;
wobei jeder unterirdische Injektor (20) ein Rohr (44) umfasst, das hinter einem Bodenbearbeitungselement (28, 46) des Kultivators angeordnet ist;
wobei jedes Rohr (44) eingerichtet ist, den abgegebenen Düngemittelbeutel (15) aufzunehmen und den abgegebenen Düngemittelbeutel (15) zum unterirdischen Abgabeerdbereich (22) zu führen.

2. System (10) nach Anspruch 1, wobei das Bodenbearbeitungselement (28, 46) ein Schaft (46) oder ein Grubber (28) ist; und/oder
wobei das Rohr (44) einen durchlässigen Abschnitt (54) zumindest in einem Teil des Rohrs (44) umfasst, welcher unter einem Bodenniveau angeordnet ist, wobei der durchlässige Abschnitt (54) zumindest in einer Nachlaufrichtung in Bezug auf eine Bodenbearbeitungsrichtung (T) des Kultivators flüssigkeitsdurchlässig ist, wobei der durchlässige Abschnitt (54) insbesondere beabstandete Stäbe (56) oder Drahtgeflecht umfasst.

3. System (10) nach Anspruch 1 oder 2, wobei das System zumindest eine Entsiegelungseinheit (30) umfasst, die an oder nahe dem einen oder den mehreren unterirdischen Injektoren (20) angeordnet ist, wobei die Entsiegelungseinheit (30) eingerichtet ist, den abgegebenen Düngemittelbeutel (15) zumindest teilweise zu öffnen, was es dem Düngemittelbeutel (14) ermöglicht, das landwirtschaftliche Düngemittel in den unterirdischen Abgabeerdbereich (22) abzugeben,
wobei die Entsiegelungseinheit (30) insbesondere eingerichtet ist, den abgegebenen Düngemittelbeutel (15) nahe oder unter einem Bodenniveau zu öffnen, nachdem der abgegebene Düngemittelbeutel (15) aus dem Entnahme- und Abgabeabschnitt (16) abgegeben wurde,
wobei jede Entsiegelungseinheit (30) vorzugsweise eine Rolle (50) umfasst, die eingerichtet ist, den abgegebenen Düngemittelbeutel (15) unter Verwendung eines Vorsprungs (52) und/oder einer Klinge (48), die auf und/oder gegenüber der Rolle (50) angeordnet ist, durch eines oder mehreres aus Punktieren, Schneiden, Reißen und Brechen des abgegebenen Düngemittelbeutels (15) während einer Drehbewegung (R) der Rolle (50) zu öffnen, wobei die Drehbewegung (R) einen Eingriff der Klinge (48) und/oder des Vorsprungs (52) mit dem abgegebenen Düngemittelbeutel (15) bewirkt und/oder unterstützt, wobei die Rolle (50) vorzugsweise in einem Abschnitt des einen oder der mehreren unterirdischen Injektoren (20) angeordnet ist, der an oder unter der Oberfläche (S) des Bodens liegt, der durch den Kultivator bearbeitet wurde;
wobei das System (10) am bevorzugtesten einen Förderer (34) umfasst, der mit der Rolle (50) gekoppelt ist, um das Einbringen des abgegebenen Düngemittelbeutels (15) in den unterirdischen Abgabeerdbereich (22) zu unterstützen.

4. System (10) nach Anspruch 3, wobei die Düngemittelbeutel (14) ein einschließendes Material umfassen, um das landwirtschaftliche Düngemittel einzuschließen, wobei die Entsiegelungseinheit (30) eingerichtet ist, den abgegebenen Düngemittelbeutel (15) zu leeren, und wobei das System (10) ferner eine Rückgewinnungseinheit umfasst, die eingerichtet ist, das Abgeben des einschließenden Materials des abgegebenen Düngemittelbeutels (15) in das Erdreich zu verhindern und leere Düngemittelbeutel (15e), bevorzugt in einem Rückgewinnungsbehälter (72, 82) oder auf einer Trommel, zurückzugewinnen,
wobei das System insbesondere ferner mehrere zumindest flüssigkeitsdurchlässige Rückhalter (54, 68), insbesondere Drahtgeflechte, umfasst, wobei die Rückhalter (54, 68) nahe einer Unterseite jedes unterirdischen Injektors (20) angeordnet sind, um zu verhindern, dass das einschließende Material des abgegebenen Düngemittelbeutels (15) im Erdreich verbleibt, während der abgegebene Düngemittelbeutel (15) im unterirdischen Abgabeerdbereich (22) geleert wird; und/oder
wobei die Rückgewinnungseinheit insbesondere zumindest eines aus einer pneumatischen Vorrichtung und einem Förderer (66) umfasst, welche mit dem unterirdischen Injektor (20) integriert sind, um leere Düngemittelbeutel (15e) aus dem einen oder den mehreren unterirdischen Injektoren (20) zurückzugewinnen.

5. Landwirtschaftliches Düngemittelausbringungssystem (10), das zum Ausbringen von zumindest teilweise flüssigem landwirtschaftlichem Düngemittel eingerichtet ist, insbesondere einem landwirtschaftlichen Arbeitsgerät (24), wobei das System (10) umfasst:
- einen Laderaum (12), der eingerichtet ist, mehrere Düngemittelbeutel (14) zu halten, wobei die Düngemittelbeutel (14) jeweils eine vorbestimmte Menge des zumindest teilweise flüssigen landwirtschaftlichen Düngemittels einschließen;
- einen Entnahme- und Abgabeabschnitt (16), der mit dem Laderaum (12) gekoppelt ist, wobei der Entnahme- und Abgabeabschnitt (16) eingerichtet ist, die Düngemittelbeutel (14) aus dem Laderaum (12) zu entnehmen und einen entnommenen Düngemittelbeutel (15) in einer steuerbaren Weise abzugeben; und
- einen oder mehrere unterirdische Injektoren (20), die jeweils mit dem Entnahme- und Abgabeabschnitt (16) gekoppelt sind, wobei die unterirdischen Injektoren (20) eingerichtet sind, den abgegebenen Düngemittelbeutel (15) aus dem Entnahme- und Abgabeabschnitt (16) aufzunehmen und die vorbestimmte Menge des landwirtschaftlichen Düngemittels in einen unterirdischen Abgabeerdbereich (22) mehr als 5 cm unter der Erdoberfläche einzubringen;
wobei die unterirdischen Injektoren (20) jeweils einen Punktierkopf (84) umfassen, wobei das System (10) eingerichtet ist, den abgegebenen Düngemittelbeutel (15) in den unterirdischen Abgabeerdbereich (22) während einer vertikalen unterirdischen Injektionssequenz der unterirdischen Injektoren (20) einzubringen, wobei die unterirdischen Injektoren (20) eingerichtet sind zum:
- Durchdringen der Erdoberfläche (S) mit dem Punktierkopf (84) des unterirdischen Injektors (20);
- Freigeben des abgegebenen Düngemittelbeutels (15) in den unterirdischen Abgabeerdbereich (22);
- Zurückziehen des Punktierkopfs (84) oberhalb der Erdoberfläche (S).

6. System (10) nach Anspruch 5, wobei der Punktierkopf (84) betrieben werden kann, um Erde in dem unterirdischen Abgabeerdbereich (22) zu verdrängen.

7. System (10) nach Anspruch 5 oder 6, wobei eine Entsiegelungseinheit (30) eingerichtet ist, den abgegebenen Düngemittelbeutel (15) synchron mit der vertikalen unterirdischen Injektionssequenz der unterirdischen Injektoren (20) zumindest teilweise zu öffnen, was es dem Düngemittelbeutel (14) ermöglicht, das landwirtschaftliche Düngemittel in den unterirdischen Abgabeerdbereich (22) abzugeben, wobei die Entsiegelungseinheit (30) insbesondere Entsiegelungselemente an oder nahe dem Punktierkopf (84) jedes unterirdischen Injektors (20) umfasst.

8. System (10) nach einem der vorhergehenden Ansprüche, wobei das System (10) zum Ausbringen von zumindest teilweise organischem Düngemittel eingerichtet ist, insbesondere umfassend Gülle und/oder Gärsubstrat.

9. System (10) nach einem der vorhergehenden Ansprüche, ferner umfassend einen Förderer (34), um die mehreren Düngemittelbeutel (14) vom Laderaum (12) zum Entnahme- und Abgabeabschnitt (16) zu führen; und/oder
wobei der Entnahme- und Abgabeabschnitt (16) einen oder mehrere steuerbare Abgabemechanismen (58) umfasst, die eingerichtet sind, einen durch den Entnahme- und Abgabeabschnitt (16) entnommenen Düngemittelbeutel (14) selektiv abzugeben, wobei der eine oder die mehreren steuerbaren Abgabemechanismen (58) insbesondere zumindest eines aus einer pneumatischen Saugvorrichtung (38), einem pneumatischen Abgabestrahl (40) und einer Klappe (60) umfassen.

10. System (10) nach einem der vorhergehenden Ansprüche, wobei der eine oder die mehreren unterirdischen Injektoren (20) eingerichtet sind, den abgegebenen Düngemittelbeutel (15) in den unterirdischen Abgabeerdbereich (22) einzubringen, wobei sich der unterirdische Abgabeerdbereich (22) insbesondere in einem Bereich von 5 cm bis 35 cm, vorzugsweise von 10 cm bis 30 cm, unter der Erdoberfläche (S) befindet; und wobei das System (10) insbesondere ferner eine Positionsaufzeichnungseinheit umfasst, um die Position des in den unterirdischen Abgabeerdbereich (22) eingebrachten abgegebenen Düngemittelbeutels (15) aufzuzeichnen; und/oder
wobei der Entnahme- und Abgabeabschnitt (16) eingerichtet ist, den entnommenen Düngemittelbeutel (15) basierend auf einer Position der unterirdischen Injektoren (20), insbesondere basierend auf einer zurückgelegten Distanz eines zugehörigen unterirdischen Injektors (20) seit der letzten selektiven Abgabe eines Düngemittelbeutels (14), steuerbar abzugeben; und/oder
ferner umfassend eine Positionsbestimmungseinheit, wobei der Entnahme- und Abgabeabschnitt (16) eingerichtet ist, das Abgeben des Düngemittelbeutels (15) in den unterirdischen Abgabeerdbereich (22) basierend auf einer durch die Positionsbestimmungseinheit bestimmten aktuellen Position auszulösen, wobei diese aktuelle Position die aktuelle Position von dem einem oder den mehreren unterirdischen Injektoren (20) oder die Position einer Komponente ist, die in einer bekannten, insbesondere festen, räumlichen Beziehung zu dem einen oder den mehreren unterirdischen Injektoren (20) angeordnet ist.

11. System (10) nach einem der vorhergehenden Ansprüche, ferner umfassend einen Additivdispenser (94) zum Abgeben von Additiven (96) und/oder Reagenzien (96) in den unterirdischen Abgabebereich, insbesondere zusammen mit dem abgegebenen Düngemittelbeutel (15), bevorzugt eine Additivleitung (94), die mit jedem des einen oder der mehreren unterirdischen Injektoren (20) integriert ist, um Additive (96) und/oder Reagenzien (96) in den unterirdischen Abgabeerdbereich (22) abzugeben.

12. System (10) nach einem der vorhergehenden Ansprüche, ferner umfassend ein Trenngitter (31), um die mehreren Düngemittelbeutel (14) von dem Laderaum (12) in nacheinander ausgelegte Düngemittelbeutel (14) zu trennen, wobei das Trenngitter (31) bevorzugt eingerichtet ist, die Düngemittelbeutel (14) auszurichten, und am bevorzugtesten mit einer wellenartigen Bewegung angetrieben wird, um die Trennung der Düngemittelbeutel (14) in nacheinander ausgelegte Düngemittelbeutel (14) zu unterstützen; und/oder
wobei das System (10) ferner eine Trommel (76, 76a-e) umfasst, um einen Strang (74) von mechanisch verbundenen Düngemittelbeuteln (14) zu halten, welche auf die Trommel (76, 76a-e) aufgerollt sind; wobei das System (10) insbesondere ferner eine Trenneinheit (68) umfasst, um einzelne Düngemittelbeutel (14) vom Strang (74) von verbundenen Düngemittelbeuteln (14) zu trennen, und/oder wobei das System (10) ferner eine Rückgewinnungstrommel (82) umfasst, um den Strang (74) von verbundenen Düngemittelbeuteln (14) zurückzugewinnen, nachdem das landwirtschaftliche Düngemittel in den unterirdischen Abgabeerdbereich (22) abgegeben wurde.

13. Verfahren zum Ausbringen von in Düngemittelbeuteln (14) eingeschlossenem landwirtschaftlichem Düngemittel mit einem landwirtschaftlichen Arbeitsgerät (24) unter Verwendung eines Systems (10) nach einem der vorhergehenden Ansprüche, wobei die Düngemittelbeutel (14) jeweils eine vorbestimmte Menge des landwirtschaftlichen Düngemittels einschließen, wobei das Verfahren umfasst:
- Entnehmen und Abgeben eines Düngemittelbeutels (14) in einer steuerbaren Weise aus einem Reservoir (12), das mehrere Düngemittelbeutel (14) enthält;
- Aufnehmen eines aus dem Reservoir (12) abgegebenen Düngemittelbeutels (15) und
- Einbringen der vorbestimmten Menge des landwirtschaftlichen Düngemittels in einen unterirdischen Erdbereich (22).

14. Verfahren nach Anspruch 13, ferner umfassend:
- Einbringen des abgegebenen Düngemittelbeutels (15) in den unterirdischen Abgabeerdbereich (22); und/oder
- zumindest teilweises Öffnen des abgegebenen Düngemittelbeutels (15), was es dem Düngemittelbeutel (15) ermöglicht, landwirtschaftliches Düngemittel in den unterirdischen Abgabeerdbereich (22) abzugeben.

15. Verfahren nach Anspruch 13 oder 14, ferner umfassend die Schritte:
- Durchdringen einer Erdoberfläche (S) mit einem Punktierkopf (84) und Vorschieben des Punktierkopfs (84) in den unterirdischen Abgabeerdbereich (22);
- Freigeben des abgegebenen Düngemittelbeutels (15) in den unterirdischen Abgabeerdbereich (22);
- Zurückziehen des Punktierkopfs (84) oberhalb der Erdoberfläche (S) nach dem Freigeben des abgegebenen Düngemittelbeutels (15).

## Revendications

1. Système de déploiement de fertilisant agricole (10) conçu pour le déploiement d'un fertilisant agricole au moins partiellement liquide, plus particulièrement un outillage agricole (24), ledit système (10) comprenant :
- un récipient (12) conçu pour contenir une pluralité de poches de fertilisant (14), lesdites poches de fertilisant (14) contenant chacune une quantité prédéterminée dudit fertilisant agricole au moins partiellement liquide ;
- une section d'extraction et de distribution (16) couplée audit récipient (12), ladite section d'extraction et de distribution (16) étant conçue pour extraire lesdites poches de fertilisant (14) du récipient (12) et pour distribuer une poche de fertilisant (15) extraire de manière contrôlable ;
- un cultivateur et
- un ou plusieurs injecteurs souterrains (20), couplés chacun à ladite section d'extraction et de distribution (16), lesdits injecteurs souterrains (20) étant conçus pour recevoir la poche de fertilisant distribuée (15) en provenance de ladite section d'extraction et de distribution (16) et pour introduire la quantité prédéterminée dudit fertilisant agricole dans une zone de dépôt souterraine du sol (22) plus de 5 cm en dessous de sa surface ;
dans lequel chaque injecteur souterrain (20) comprend un tube (44) disposé derrière un élément de labourage (28, 46) du cultivateur ;
dans lequel chaque tube (44) est conçu pour recevoir la poche de fertilisant distribuée (15) et pour guider la poche de fertilisant distribuée (15) vers ladite zone de dépôt souterraine du sol (22).

2. Système (10) selon la revendication 1, dans lequel ledit élément de labourage (28, 46) est une tige (46) ou une griffe (28) ; et/ou
dans lequel le tube (44) comprend une section perméable (54) au moins dans une portion du tube (44) disposée en dessous du niveau du sol, la section perméable (54) étant perméable aux liquides au moins dans une direction vers l'arrière par rapport à une direction de labourage (T) du cultivateur, ladite section perméable (54) comprenant plus particulièrement des barres espacées (56) ou un treillage métallique.

3. Système (10) selon la revendication 1 ou 2, dans lequel le système comprend au moins une unité de descellement (30) disposé au niveau ou proche du ou des injecteurs souterrains (20), ladite unité de descellement (30) étant conçue pour desceller au moins partiellement la poche de fertilisant distribuée (15), ce qui permet à ladite poche de fertilisant (14) de déposer ledit fertilisant agricole dans la zone de dépôt souterraine du sol (22),
dans lequel l'unité de descellement (30) est, plus particulièrement, conçue pour desceller ladite poche de fertilisant distribuée (15) près ou en dessous du niveau du sol une fois que ladite poche de fertilisant distribuée (15) a été distribuée en provenance de ladite section d'extraction et de distribution (16),
dans lequel chaque unité de descellement (30) comprend de préférence un rouleau (50) conçu pour desceller la poche de fertilisant distribuée (15) à l'aide d'une saillie (52) et/ou d'une lame (48) disposée sur et/ou en face du rouleau (50), par une ou plusieurs actions parmi une perforation, une découpe, un déchirement ou une rupture de la poche de fertilisant distribuée (15) pendant un mouvement de révolution (R) du rouleau (50), dans lequel ledit mouvement de révolution (R) provoque et/ou favorise un contact de ladite lame (48) et/ou saillie (52) avec la poche de fertilisant distribuée (15), ledit rouleau (50) étant de préférence disposé dans une portion de l'un ou plusieurs injecteurs souterrains (20) se trouvant au niveau ou en dessous de la surface (S) du sol labouré par le cultivateur ;
dans lequel le système (10) comprend de préférence un convoyeur (34) couplé au rouleau (50) afin de faciliter l'introduction de la poche de fertilisant distribuée (15) dans la zone de dépôt souterraine du sol (22).

4. Système (10) selon la revendication 3, dans lequel les poches de fertilisant (14) comprennent un matériau d'enveloppe pour envelopper ledit fertilisant agricole, dans lequel l'unité de descellement (30) est conçue pour vider la poche de fertilisant distribuée (15) et dans lequel le système (10) comprend en outre une unité de récupération conçue pour empêcher le dépôt du matériau d'enveloppe de la poche de fertilisant distribuée (15) dans le sol et pour récupérer les poches de fertilisant vides (15e), de préférence dans un bac de récupération (72, 82) ou sur un tambour,
dans lequel le système comprend plus particulièrement en outre une pluralité de dispositifs de retenue (54, 68) au moins perméables aux liquides, plus particulièrement un treillage métallique, lesdits dispositifs de retenue (54, 68) étant disposés près du côté inférieur de chaque injecteur souterrain (20) afin d'empêcher le matériau d'enveloppe de la poche de fertilisant distribuée (15) de rester dans le sol, tandis que la poche de fertilisant distribuée (15) est vidée dans la zone de dépôt souterraine du sol (22) ; et/ou
dans lequel l'unité de récupération comprend plus particulièrement au moins un dispositif pneumatique et un convoyeur (66) intégré avec l'injecteur souterrain (20) afin de récupérer les poches de fertilisant vides (15e) dans le ou les injecteurs souterrains (20).

5. Système de déploiement de fertilisant agricole (10) conçu pour le déploiement d'un fertilisant agricole au moins partiellement liquide, plus particulièrement un outillage agricole (24), ledit système (10) comprenant :
- un récipient (12) conçu pour contenir une pluralité de poches de fertilisant (14), lesdites poches de fertilisant (14) contenant chacune une quantité prédéterminée dudit fertilisant agricole au moins partiellement liquide ;
- une section d'extraction et de distribution (16) couplée audit récipient (12), ladite section d'extraction et de distribution (16) étant conçue pour extraire lesdites poches de fertilisant (14) du récipient (12) et pour distribuer une poche de fertilisant (15) extraire de manière contrôlable ; et
- un ou plusieurs injecteurs souterrains (20), couplés chacun à ladite section d'extraction et de distribution (16), lesdits injecteurs souterrains (20) étant conçus pour recevoir la poche de fertilisant distribuée (15) en provenance de ladite section d'extraction et de distribution (16) et pour introduire la quantité prédéterminée dudit fertilisant agricole dans une zone de dépôt souterraine du sol (22) plus de 5 cm en dessous de sa surface ;
dans lequel lesdits injecteurs souterrains (20) comprennent chacun une tête de perforation (84),
dans lequel le système (10) est conçu pour introduire la poche de fertilisant distribuée (15) dans la zone de dépôt souterraine du sol (22) pendant une séquence d'injection souterraine verticale desdits injecteurs souterrains (20), lesdits injecteurs souterrains (20) étant conçus pour :
- pénétrer la surface du sol (S) avec la tête de perforation (84) de l'injecteur souterrain (20) ;
- libérer la poche de fertilisant distribuée (15) dans la zone de dépôt souterraine du sol (22) ;
- rétracter la tête de perforation (84) au-dessus de la surface du sol (S).

6. Système (10) selon la revendication 5, dans lequel la tête de perforation (84) peut être actionnée pour déplacer la terre dans la zone de dépôt souterraine du sol (22).

7. Système (10) selon la revendication 5 ou 6, dans lequel une unité de descellement (30) est conçue pour desceller au moins partiellement la poche de fertilisant distribuée (15) de manière synchrone avec la séquence d'injection souterraine verticale des injecteurs souterrains (20), ce qui permet à ladite poche de fertilisant (14) de libérer ledit fertilisant agricole dans la zone de dépôt souterrain du sol (22), dans lequel l'unité de descellement (30) comprend plus particulièrement des éléments de descellement au niveau ou près de ladite tête de perforation (84) de chaque injecteur souterrain (20).

8. Système (10) selon l'une des revendications précédentes, ledit système (10) étant conçu pour le déploiement d'un fertilisant agricole au moins partiellement biologique, plus particulièrement comprenant du fumier et/ou un substrat de fermentation.

9. Système (10) selon l'une des revendications précédentes, comprenant en outre un convoyeur (34) pour guider la pluralité de poches de fertilisant (14) du récipient (12) vers ladite section d'extraction et de distribution (16) ; et/ou
dans lequel ladite section d'extraction et de distribution (16) comprend un ou plusieurs mécanismes de distribution contrôlables (58) conçus pour distribuer de manière sélective une poche de fertilisant (14) extraite de ladite section d'extraction et de distribution (16), lesdits un ou plusieurs mécanismes de distribution contrôlables (58) comprenant plus particulièrement au moins un parmi un dispositif d'aspiration pneumatique (38), un jet d'évacuation pneumatique (40) et une trappe (60).

10. Système (10) selon l'une des revendications précédentes, dans lequel le ou les injecteurs souterrains (20) sont conçus pour introduire la poche de fertilisant distribuée (15) dans la zone de dépôt souterraine du sol (22), dans lequel ladite zone de dépôt souterrain du sol (22) est plus particulièrement située à une distance de 5 cm à 35 cm, de préférence de 10 cm à 30 cm en dessous de la surface du sol (S) ; et dans lequel le système (10) comprend plus particulièrement en outre une unité d'enregistrement de position pour enregistrer la position de la poche de fertilisant distribuée (15) introduite dans la zone de dépôt souterraine du sol (22) ; et/ou
dans lequel ladite section d'extraction et de distribution (16) est conçue pour distribuer de manière contrôlée la poche de fertilisant extraite (15) sur la base d'une position des injecteurs souterrains (20), plus particulièrement sur la base d'une distance parcourue d'un injecteur souterrain (20) associé depuis la dernière distribution sélective d'une poche de fertilisant (14) ; et/ou
comprenant en outre une unité de détermination de position, dans lequel ladite section d'extraction et de distribution (16) est conçue pour déclencher la distribution de la poche de fertilisant (15) dans la zone de dépôt souterraine du sol (22) sur la base d'une position actuelle déterminée par l'unité de détermination de position, dans lequel ladite position actuelle est la position actuelle d'un parmi le ou les injecteurs souterrains (20) ou la position d'un composant disposé dans une relation spatiale connue, de préférence fixe, par rapport auxdits un ou plusieurs injecteurs souterrains (20).

11. Système (10) selon l'une des revendications précédentes, comprenant en outre un distributeur d'additifs (94) pour la distribution d'additifs (96) et/ou de réactifs (96) dans la zone de dépôt souterraine, plus particulièrement conjointement avec la poche de fertilisant distribuée (15), de préférence un conduit d'additif (94) intégré avec chacun des un ou plusieurs injecteurs souterrains (20), afin de distribuer des additifs (96) et/ou des réactifs (96) dans la zone de dépôt souterraine du sol (22).

12. Système (10) selon l'une des revendications précédentes, comprenant en outre une grille de séparation (31) pour séparer la pluralité de poches de fertilisant (14) du récipient (12), afin d'obtenir des poches de fertilisant (14) disposées de manière séquentielle, dans lequel ladite grille de séparation (31) est de préférence conçue pour orienter lesdites poches de fertilisant (14) et est de préférence entraînée avec un mouvement d'ondulation afin de permettre la séparation desdites poches de fertilisant (14), afin d'obtenir des poches de fertilisant (14) disposées de manière séquentielle ; et/ou
dans lequel le système (10) comprend en outre un tambour (76, 76a-e) pour contenir (12) une chaîne (74) de poches de fertilisant (14), reliées mécaniquement, enroulées sur ledit tambour (76, 76a-e) ;
dans lequel le système (10) comprend plus particulièrement en outre une unité de séparation (68) pour séparer les poches de fertilisant (14) séparées individuelles de ladite chaîne (74) de poches de fertilisant (14) reliées et/ou dans lequel le système (10) comprend en outre un tambour de récupération (82) pour récupérer la chaîne (74) de poches de fertilisant (14) reliées une fois ledit fertilisant agricole libéré dans ladite zone de dépôt souterraine du sol (22).

13. Procédé de déploiement d'un fertilisant agricole contenu dans des poches de fertilisant (14) avec un outillage agricole (24), à l'aide d'un système (10) selon l'une des revendications précédentes, lesdites poches de fertilisant (14) contenant chacune une quantité prédéterminée dudit fertilisant agricole, ledit procédé comprenant :
- l'extraction et la distribution d'une poche de fertilisant (14) à partir d'un réservoir (12) contenant une pluralité de poches de fertilisant (14) de manière contrôlable ;
- la réception d'une poche de fertilisant (15) distribuée à partir dudit réservoir (12) et
- l'introduction de la quantité prédéterminée dudit fertilisant agricole dans une zone souterraine du sol (22).

14. Procédé selon la revendication 13, comprenant en outre :
- l'introduction de ladite poche de fertilisant distribuée (15) dans la zone de dépôt souterraine du sol (22) ; et/ou
- le descellement au moins partiel de ladite poche de fertilisant distribuée (15), permettant ainsi à ladite poche de fertilisant (15) de libérer le fertilisant agricole dans la zone de dépôt souterraine du sol (22).

15. Procédé selon la revendication 13 ou 14, comprenant en outre les étapes suivantes :
- pénétration d'une surface du sol (S) avec une tête de perforation (84) et avance de ladite tête de perforation (84) dans ladite zone de dépôt souterraine du sol (22) ;
- libération de ladite poche de fertilisant distribuée (15) dans la zone de dépôt souterraine du sol (22) ;
- rétraction de ladite tête de perforation (84) au-dessus de la surface du sol (S) après la libération de ladite poche de fertilisant distribuée (15).
